# EUROPÄISCHE PATENTSCHRIFT

(11) **EP 3 969 686 B1**
(45) Veröffentlichungstag und Bekanntmachung des Hinweises auf die Patenterteilung: **08.11.2023**
(21) Anmeldenummer: 20727193.3
(22) Anmeldetag: 14.05.2020
(51) Int. Cl.: E04H 3/02, E04H 3/30, E04H 3/24, E04H 14/00, A47F 10/06

(54) **EVENTSYSTEM**
EVENT SYSTEM
SYSTÈME POUR ÉVÉNEMENTS

(30) Priorität: 16.05.2019 DE 102019113013
(43) Veröffentlichungstag der Anmeldung: 23.03.2022
(73) Patentinhaber: Mack Rides IP GmbH & Co. KG, 79183 Waldkirch (DE)
(72) Erfinder: BURGER, Günter, 79183 Waldkirch (DE)
(74) Vertreter: Westphal, Mussgnug & Partner Patentanwälte mbB
(86) Internationale Anmeldenummer: PCT/EP2020/063557
(87) Internationale Veröffentlichungsnummer: WO 2020/229640

(56) Entgegenhaltungen:
- EP-A1- 1 833 331
- WO-A1-2014/130458
- WO-A1-2018/002962
- JP-A- S61 131 879
- US-A- 6 016 901

## Beschreibung

Die Erfindung betrifft ein Eventsystem mit den Merkmalen des Oberbegriffs des Patentanspruchs 1 und ein Verfahren zum Betrieb eines Eventsystems mit den Merkmalen des Patentanspruchs 19.

Heutzutage wird die Teilnahme an Veranstaltungen des gesellschaftlichen Lebens mit immer größeren Erwartungen und einem Streben nach Erlebnissen, die über die eigentliche Veranstaltung hinausgehen verknüpft. Beispielsweise wird ein Restaurantbesuch in immer weiter zunehmendem Umfang nicht mehr allein als Aktivität zum Zwecke der Nahrungsaufnahme und gegebenenfalls noch zum Zwecke eines gesellschaftlichen Beisammenseins gesehen, sondern soll gleichzeitig ein kurzweiliges Erlebnis darstellen. Dementsprechend gibt es immer mehr Angebote im Bereich der Erlebnisgastronomie, die ein solches Erlebnis mit dem Essen koppeln. Im einfachsten Fall kann dies im Rahmen eines Themenrestaurants erfolgen, bei dem die Einrichtung, die Speisekarte, aber auch das Outfit der Bedienungen an ein bestimmtes Thema angepasst sind.

Darüber hinaus haben sich inzwischen sehr beliebte Formate wie Krimidinner, Witzigmanns Palazzo oder Schuhbecks Teatro entwickelt, bei denen die Mahlzeit von einem Theaterstück oder einer Show-Veranstaltung umrahmt oder in sie eingebettet wird.

Ein anderer populärer Ansatz besteht darin, dass Teile des üblichen Ablaufs in einem Restaurant in unüblicher, außergewöhnlicher Weise durchgeführt werden. Ein Schritt in diese Richtung ist das Show-Cooking, bei dem die Zubereitung der Speisen direkt vor den Augen der Gäste erfolgt. Bekannt ist auch, dass das Bedienpersonal Einlagen präsentiert. Eine weitere zu dieser Kategorie zählende Variante sind die bekannten Rollercoaster-Restaurants, die auch in der EP 1 833 331 B1 oder der DE 10 2015 011 538 beschrieben sind. In diesen Restaurants wird der traditionelle Servierprozess dadurch ersetzt, dass die bestellten Speisen und Getränke unter den Blicken der Gäste über ein achterbahnartiges Schienensystem den Tischen zugeführt werden, wobei die Beladung dieses Schienensystems teilweise für die Gäste sichtbar durch Roboter oder Roboterarme erfolgt.

Weiteren Stand der Technik bilden die Druckschriften WO 2018 002 962 A1 und die US 6 016 901 A.

Der vorliegenden Erfindung liegt daher die Aufgabe zugrunde, ein neues Eventsystem anzugeben, das es insbesondere ermöglicht, die dem Besuch eines Events, insbesondere einem Restaurant-, Cafe- oder Barbesuch, inhärenten, im Fall eines Restaurant-, Cafe- oder Barbesuchs insbesondere geschmacklichen Sinnesreize so zu ergänzen, dass eine umfassendere sensorische Erfahrung für die Gästen des animierten Events, das auch ein Meeting oder eine kulturelle Veranstaltung sein kann, bereitgestellt werden kann, das das Erlebnis des Eventbesuchs intensiviert.

Diese Aufgabe wird gelöst durch ein Eventsystem mit den Merkmalen des Patentanspruchs 1 und ein Verfahren zum Betrieb eines solchen Eventsystems mit den Merkmalen des Patentanspruchs 19. Vorteilhafte Weiterbildungen des Eventsystems bzw. des Verfahrens sind Gegenstand der jeweiligen abhängigen Ansprüche.

Das erfindungsgemäße Eventsystem für ein animiertes Event umfasst Eventmobiliar, das mindestens einen im Raum bewegbaren Tisch und/oder mindestens einen im Raum bewegbaren Stuhl aufweist und/oder eine Vorrichtung zur sensorischen Stimulation von Gästen des animierten Events, die im Stand der Technik typischerweise eine globale, also für alle Gästen des Events im Wesentlichen gleichartige Beleuchtung mit einer Beleuchtungsanlage und/oder Beschallung mit einer Soundanlage ist.

Erinnert sei vorsorglich an dieser Stelle daran, dass nicht zwingend Tisch und Stuhl erforderlich sein müssen, man denke nur an Stehrestaurants oder Stühle mit integrierter Abstellmöglichkeit für Speisen und/oder Getränke.

Erfindungswesentlich ist, dass dieses im Raum bewegliche Eventmobiliarteil Bewegungsmittel für eine maschinelle Bewegung aufweist, und dass das Eventsystem ferner eine erste Steuerung umfasst, die eingerichtet ist, um die maschinelle Bewegung und die Ausgabe der Vorrichtung zur sensorischen Stimulation von Gästen des animierten Events miteinander synchronisiert zu steuern.

Konkret kann dies beispielsweise in einem sehr einfachen möglichen Ausführungsbeispiel bedeuten, dass Tische und Stühle oder aus miteinander verbundenen Tischen und Stühlen gebildete Gruppen jeweils ferngesteuert verfahrbar sind und dann, wenn eine Soundanlage einen Walzer spielt, die einzelnen Tische mit den ihnen zugeordneten Stühlen und etwaig daran/darauf sitzenden Gästen des animierten Events umeinander kreisen, während bei einem von der Soundanlage gespielten Marsch die einzelnen Tische mit den ihnen zugeordneten Stühlen und etwaig daran/darauf sitzenden Gästen hintereinander in einer Kolonne durch die Event-Location, z.B. ein Restaurant, ziehen.

Ein weiter Aspekt betrifft ein Eventsystem für ein animiertes Event, das, ergänzend zu dem bereits beschriebenen Eventsystem, umfassend Eventmobiliar, mindestens einen im Raum bewegbaren Tisch und/oder mindestens einen im Raum bewegbaren Stuhl aufweist und/oder eine Vorrichtung zur sensorischen Stimulation von Gästen des animierten Events ergänzend oder alternativ mindestens einen bewegbaren Bodenabschnitt aufweist, der durch mindestens eine Bewegungseinrichtung maschinell beweglich ist. Erfindungswesentlich hierbei ist, dass dieser in dem Raum mindestens eine bewegbare Bodenabschnitt mindestens eine Bewegungseinrichtung für eine maschinelle Bewegung aufweist, und dass das Eventsystem ferner eine erste Steuerung umfasst, die eingerichtet ist, um die maschinelle Bewegung und die Ausgabe der Vorrichtung zur sensorischen Stimulation von Gästen des animierten Events miteinander synchronisiert zu steuern.

Bewegungsmittel oder eine Bewegungseinrichtung für eine maschinelle Bewegung im Sinne dieser Offenbarung sind bereits dann vorhanden, wenn ein Zusammenwirken mit anderen, außerhalb des entsprechenden Eventmobilarbestandteils möglich ist, um eine Bewegung auszuführen.

Insbesondere setzt eine maschinelle Bewegung zwar voraus, dass sie angetrieben erfolgt, es kann aber beispielsweise ausreichen, wenn lediglich ein Kopplungselement zur Ankopplung an einen außerhalb des Eventmobiliarbestandteils oder des Bodenabschnitts vorgesehenen Antrieb vorgesehen ist, etwa eine magnetische Kopplung an ein Magnettransportsystem oder eine mechanische Kopplung an eine Förderkette; der Antrieb muss also nicht zwingend vollständig in das Eventmobiliarbestandteil integriert sein, damit dieses die beanspruchten Bewegungsmittel aufweist.

Ebenso kann eine Kopplung an eine extern vorgesehene Steuerung ausreichen, insbesondere an die Steuerung, die die Synchronisierung der Bewegung gewährleistet. Eine solche Kopplung kann beispielsweise durch drahtlos an einen in das Eventmobiliarbestandteil oder den Bodenabschnitt integrierten Antrieb übermittelte Steuersignale erfolgen, so dass eine lokale Steuerung zwar möglich und für eine Reihe von Anwendungen sinnvoll, aber nicht notwendig ist.

Die Steuerung kann Teil einer Gesamtablaufssteuerung sein oder ihrerseits von einer solchen kontrolliert werden.

Anzumerken ist dabei insbesondere, dass die Anwesenheit von Mitteln zur Durchführung einer maschinell gesteuerten Bewegung nicht ausschließt, dass zusätzlich Mittel zur Durchführung einer vom Gast selbst gesteuerten Bewegung vorliegen, wobei auch Teile dieser Mittel zu beiden Zwecken Verwendung finden können. In der Tat ist insbesondere gemäß einer bevorzugten Weiterbildung der Erfindung vorgesehen, dass das Eventmobiliarbestandteil zusätzlich auch Bedienelemente zur Beeinflussung der Bewegung durch den Gast, beispielsweise Pedale, Antriebswippen, Handhebel, die wie senkrechte Ruder wirken oder dergleichen, aufweist.

Die Bewegungseinrichtung kann den mindestens einen Bodenabschnitt in mindestens einem, vorzugsweise drei oder mehr, Freiheitsgrad bewegen kann. In diesem einfachsten Fall kann der mindestens eine Bodenabschnitt eine Hubbewegung ausführen und dadurch Beschleunigungseffekte, wie sie bei einem Fahrstuhl auftreten, realisieren. Die Fahrt mit dem Aufzug könnte durch weitere Effekte angereichert werden, wie ein mögliches Versagen des Aufzuges, ein Erdbeben oder andere Effekte, die neben einer reinen Hubbewegung auch überlagerte Bewegungen in Querrichtungen und /oder in den Raumwinkeln aufweisen. Bei einer komplexer ausgeführten Bewegungseinrichtung, sogenannten Hexapods, wie sie beispielsweise bei Flugsimulatoren für das Pilotentraining zum Einsatz kommt, können aber auch Schwenk-, Roll- und Kippbewegungen realisiert werden, also Bewegungen in bis zu 6 Freiheitsgraden. Dies kann dann ausgenutzt werden, um weitere Aktions- oder Erzählmomente in den Event zu integrieren. Beispielsweise kann King Kong an dem Hochhaus, an dessen Außenfassade der Aufzug fährt, auftauchen und dem Aufzug einen Stoß versetzen, so dass er ins Schwanken gerät. Insbesondere dann, wenn die auf der Aussichtsplattform durch sensorische Stimulation simulierte Aussicht die von einem Berggipfel ist, kann man auch die Flugbewegungen eines Riesenvogels oder Drachens, der die Gäste in der sensorischen Stimulation auf den Berg trägt, simulieren, was den Gesamteindruck weiter intensiviert.

Auch kann der Bodenabschnitt sich über den gesamten Raum erstrecken und weiterhin sämtliches Eventmobiliar in dem Raum aufnehmen, bzw. das Eventmobiliar kann auf diesem Bodenabschnitt oder Boden angeordnet sein. Beispielsweise kann ein fliegender Teppich eines Märchens simuliert werden, wobei durch die Bewegungseinrichtung synchron zu der Vorrichtung zur sensorischen Stimulation von Gästen der Bodenabschnitt des gesamten Raumes auf und ab bewegt wird und gelegentlich vibrieren kann. Eine Auslenkung in den drei Raumwinkeln kann zusätzliche Reize für die Gäste erzeugen, wobei auch die Vorrichtung zur sensorischen Stimulation ergänzend Relativbewegungen vortäuschen kann, welche von dem beweglichen Eventmobiliar verstärkt oder ebenfalls erzeugt werden kann.

Die Bewegungseinrichtung kann mindestens einen Linearantrieb umfassen. Herkömmliche Bewegungseinrichtungen, die beispielsweise aus der Simulatortechnik bekannt sind, insbesondere Hexapods, können für kleine Bodenabschnitte unproblematisch verwendet werden, jedoch kann eine Skalierung auf größere Räume und größere Gewichte erhebliche Herausforderungen mit sich bringen, um insbesondere Sicherheitsaspekten des Eventsystems gerecht zu werden. Im einfachsten Fall kann beispielsweise die Bewegungseinrichtung einen Linearantrieb, wie beispielsweise einen Hydraulikzylinder, umfassen, der entweder in der Horizontalen und/oder in der Vertikalen den Bodenabschnitt bewegen kann.

Die Bewegungseinrichtung kann, um eine Skalierung zu erleichtern, einen Gewichtsausgleich aufweisen, wobei der Gewichtsausgleich die Bewegungseinrichtung zumindest soweit entlastet, dass der Bodenabschnitt im Ruhezustand des Eventsystems, also ohne Fahrgäste und/oder Eventmobiliar, kraftlos in einer vorzugsweise beliebigen Lage gehalten werden kann. Hierzu können entweder Gegengewichte vorgesehen werden, als auch Stickstoffspeicher, Dämpfer oder Federn, durch die eine bevorzugt permanente Entlastung erfolgen kann und/oder durch die, abhängig von der gewünschten Trägheit, jeweils die notwenige Energie bereitgestellt wird, um eine entsprechende Bewegung des mindestens einen Bodenabschnitts zu bewegen.

Die Bewegungseinrichtung kann eine Kulisse umfassen, durch die eine Auslenkung des mindestens einen Bodenabschnitts vorgegeben wird. Die Kulisse kann beispielsweise durch den mindestens einen Linearantrieb verschiebbar sein und relativ zu dem mindestens einen Bodenabschnitt verschoben werden. Der mindestens eine Bodenabschnitt kann wiederum an der Kulisse abgestützt gehalten sein, wobei die Kulisse die Auslenkung des mindestens einen Bodenabschnitts an der Abstützung vorgibt. Der mindestens eine Bodenabschnitt kann beispielweise an drei Abstützungen jeweils an einer Kulisse abgestützt sein. Die Kulissen können synchron betrieben werden oder asynchron. Bei einer synchronen Verschiebung der Kulissen kann eine Hubbewegung des mindestens einen Bodenabschnitts umgesetzt werden und bei asynchronen Verschiebungen überlagerte Bewegungen in allen sechs Freiheitgraden. Die Kulissen kann neben einer Rampe eine Welle aufweisen, durch die ein Rütteleffekt oder Vibrationen erzeugt werden können. Eine die Kulisse bindende Kurve kann also mehrere lokale Maxima und Minima aufweisen.

Die Vorrichtung zur sensorischen Stimulation kann insbesondere zur visuellen, akustischen, olfaktorischen und/oder haptischen Stimulation ausgelegt und/oder eingerichtet sein bzw., mit anderen Worten gesagt, eine Vorrichtung zur visuellen, akustischen, olfaktorischen und/oder haptischen Stimulation sein. Besonders bevorzugt ist, wenn ergänzend zum durch Speisen und Getränke in einem Restaurant, einem Cafe oder einer Bar ohnehin stimulierten Geschmackssinn alle anderen Sinne ebenfalls - idealerweise an ein Thema und/oder an den Ablauf einer Geschichte angepasst- stimuliert werden.

Besonders bevorzugt ist es dabei, wenn die Umgebung und/oder die sensorische Stimulation variabel und vorzugsweise auf gästespezifischen Content anpassbar sind bzw. ist.

Sie kann vorteilhafterweise nicht nur global ausgelegt sein, so dass alle Eventbesucher dieselben Inhalte präsentiert bekommen, sondern auch lokale Komponenten, die nur an einem gegebenen Tisch wiedergegeben werden, enthalten.

Erstens ist eine visuelle Stimulation möglich, die im einfachsten Fall durch Bereitstellen von Inhalten auf einem Bildschirm erfolgen kann. Eine andere Art der visuellen Stimulation ist die Projektion auf eine Fläche, z.B. eine Tischoberfläche oder eine Projektionsfläche des animierten Events. Mit Mitteln moderner Projektionstechnik kann man auf einer solchen Fläche auch virtuelle Gegenstände entstehen lassen, die täuschend echt wirken können. Auf diese Weise kann beispielsweise bei der Einbettung des Eventbesuchs in ein Thema "Expedition in Afrika" ein Strom von Riesenameisen scheinbar über den Tisch laufen. Durch derartige Projektion kann beispielsweise auch verschleiert werden, dass ein Objekt tatsächlich vom Tisch verschwunden ist, indem es durch seine Projektion ersetzt wird. Noch andere Arten visueller Effekte lassen sich durch eine Anpassung der Beleuchtung, eine Vernebelung, einen Ausstoß von Konfetti und vergleichbare Maßnahmen erreichen.

Zweitens ist eine akustische Stimulation möglich. Neben der reinen Wiedergabe von Inhalten über einen lokal angeordneten Lautsprecher kann diese auch mit einer deutlich komplexeren Soundanlage erfolgen, welche auf Input von einer übergeordneten Steuerung hin oder auf Input von ausgelesenen Sensoren hin bestimmte Soundeffekte erzeugt. Beispielsweise könnte die Sitzposition des Stuhls, auf dem der Gast sitzt, überwacht werden und bei jeder Bewegung ein Knarren eingespielt oder mit einer Kameraüberwachung ein Trinkvorgang identifiziert werden, der dann mit lauten Trinkgeräuschen begleitet wird.

Eine andere hochinteressante Alternative besteht darin, bei Einbettung in eine Rahmengeschichte lokal unterschiedliche Informationen über den jeweiligen Lautsprecher auszugeben, beispielsweise ein Mithören von Gesprächen, das bei manchen Positionen im Raum möglich ist, bei anderen aber nicht. Auf diese Weise können beispielsweise Krimi-Dinner noch interessanter gestaltet werden und Gästen zum mehrfachen Besuch derselben Veranstaltung animiert werden, um die Geschichte aus einem anderen Blickwinkel nochmal zu erleben.

Drittens ist eine olfaktorische Stimulation möglich, indem gezielt lokal Geruchsstoffe abgegeben werden. Beispielsweise kann ein Geruch nach Feuer das Erlebnis eines Brandes in der Abenteuergeschichte, mit der der Eventbesuch animiert ist, wesentlich intensivieren, oder wenn die Geschichte auf See spielt, kann man den Salzgeruch des Meeres olfaktorisch nachzustellen versuchen. Falls die Animation auch Personal und/oder Schauspieler involviert, kann auch deren Auftreten olfaktorisch untermalt werden, beispielsweise indem, wenn der Piratenkapitän am Tisch vorbeigeht, ein intensiver Rumgeruch abgegeben wird.

Viertens kann die Stimulation auch haptisch erfolgen, wofür eine Vielzahl von Realisierungsmöglichkeiten bestehen. Oben angesprochen wurden bereits Vibrationen und/oder Bewegungen des mindestens einen Bodenabschnitts, mit denen ein Geschehen untermalt werden kann. Aber auch ein Anblasen mit heißer Luft durch ein Gebläse aus Richtung eines in der Animation dargestellten Feuers oder aus dem Maul eines scheinbar vorbeikommenden, beispielsweise projizierten Tieres kann für sehr eindrucksvolle Effekte sorgen. Auch Flüssigkeiten lassen sich hier, beispielsweise durch Sprühvorrichtungen, mit Erfolg zum Einsatz bringen.

Erfindungsgemäß wird mindestens eine solche Vorrichtung zur sensorischen Stimulation mit der maschinell gesteuerten Bewegung synchronisiert betrieben, um ein stimmiges Gesamterlebnis hervorzurufen. Dies ist insbesondere dann möglich, wenn eine lokale Steuerung von Vorrichtungen am Tisch und/oder eine Steuerung zur Bewegung des Tisches (die auch dieselbe lokale Steuerung am Tisch sein kann wie die Steuerung von Vorrichtungen) mit einem übergeordneten Steuerungs- und/oder Navigationssystem interagiert.

Das Eventsystem weist mindestens ein weiteres bewegliches Eventmobiliarbestandteil in Form eines Wand-, Trenn- oder Sichtschutzelements auf.Dieses kann nicht nur dazu dienen, die Raumerlebnisse, die man während des Eventbesuchs erlebt, variabler zu gestalten, sondern auch eine Basis für weitere Effekte, z.B. eine Projektionsfläche für visuelle Stimulation, bilden. Besonders bevorzugt ist dabei, wenn auch das bewegliche Wand-, Trenn- oder Sichtschutzelement maschinell beweglich ist und diese maschinelle Bewegung entweder ebenfalls von der ersten Steuerung und/oder von einer weiteren Steuerung gesteuert wird. Dies erlaubt auch eine wechselseitige Unterstützung von Effekten, beispielsweise kann der Eindruck einer schnellen Bewegung für einen Gast, der auf dem Stuhl eines Eventmobiliarbestandteils sitzt, unterstützt werden, wenn sich nicht nur dieses Eventmobiliarbestandteil bewegt, sondern gleichzeitig ein solches gesteuertes Wand-, Trenn- oder Sichtschutzelement in Gegenrichtung.

Noch interessanter kann man den Besuch des animierten Events für die Gäste gestalten, wenn das Eventsystem ferner Mittel zur automatisierten Bereitstellung von Speisen auf dem Tisch aufweist, die von der ersten Steuerung und/oder von einer weiteren Steuerung gesteuert werden.

Insbesondere können diese durch ein weiteres maschinell bewegliches Eventmobilarbestandteil in Form einer Buffetvorrichtung bereitgestellt werden. Unter einer Buffetvorrichtung sind dabei insbesondere Vorrichtungen zu verstehen, auf denen angerichtete Speisen zum Verzehr bereitgestellt werden; es kann sich also beispielsweise auch um ein Sushi-Band handeln. Dieses Eventmobiliarbestandteil kann dann an das durch den Gästen besetzten Eventmobilarbestandteil heranfahren und sich längerfristig andocken oder den Gästen des Events in synchroner Bewegung Auswahl und Entnahme von Speisen erlauben.

Eine zweite Möglichkeit besteht darin, in Bodenflächen, Wandflächen und/oder Deckenflächen des Eventsystems Öffnungen vorzusehen, durch die Speisen und/oder Getränke durch entsprechende Transportmittel den Gästen bzw. dem Eventmobiliarteil, an bzw. auf dem er sich befindet, zugeführt werden können und/oder Geschirr nach Beendigung eines Gangs der Mahlzeit entfernt wird. Beispielsweise kann plötzlich ein Greifer von der Decke fahren und leere Teller entfernen, oder mit einem Hubmechanismus wird ein bestelltes Gericht durch eine Klappe im Boden und eine darüber positionierte Ausnehmung im Tisch, die geöffnet wird, nach oben befördert, so dass es plötzlich auf dem Tisch erscheint. Bevorzugt sind auch diese Prozesse mit dem Output der Vorrichtung zur sensorischen Stimulation synchronisiert. Beispielsweise könnte eine projizierte Affenbande, die Obst mit sich schleppt, scheinbar über den Tisch hinweg toben, und nach Beendigung der Projektion findet der Gast des animierten Events plötzlich einen Obstteller vor sich stehen, der durch einen solchen Transportmechanismus über einen verdeckten Schacht an seinen Platz befördert wurde.

Eine dritte Möglichkeit besteht in einer Bedienung durch einen Roboter oder Roboterarm, wenn die erste Steuerung und/oder die weitere Steuerung derart programmiert und eingerichtet sind bzw. ist, dass die Mittel zur automatisierten Bereitstellung von Speisen auf dem Tisch beim automatisierten Bereitstellen von Speisen mit dem Roboter zusammenwirken.

Insbesondere aus diesem Grund kann es vorteilhaft sein, wenn das Eventsystem mindestens einen Roboter oder Roboterarm aufweist, der von der ersten Steuerung und/oder von einer weiteren Steuerung gesteuert wird.

Dieser Roboter ist vorzugsweise an der Decke abgehängt oder an einem an der Decke montierten Führungssystem montiert, um die Komplexität der Koordination der vielen auf dem Boden der Event-Location, insbesondere eines Restaurants, miteinander in kollisionsfreien Einklang zu bringenden Bewegungen zu reduzieren.

Bei einer anderen Weiterbildung eines solchen Eventsystems mit einem Roboter oder Roboterarm ist vorgesehen, dass die erste Steuerung die maschinelle Bewegung des Stuhls, des Teils des Tisches oder des Tisches durch eine Wechselwirkung mit dem von der ersten Steuerung gesteuerten Roboter oder Roboterarm kontrolliert.

Dazu sollte bevorzugt mindestens ein Bestandteil des Eventmobiliars mit Mitteln zur Durchführung einer individuellen maschinell gesteuerten Bewegung eine Schnittstelle zur Wechselwirkung mit einem Roboterarm oder Roboter aufweisen. Konkret kann dies beispielsweise so aussehen, dass der Roboter oder ein Roboterarm in einen geschützten Abschnitt form- und kraftschlüssig eingreift und so entweder den Antrieb für die Bewegung oder diese mit Navigationskräften lenkt. Natürlich kann der Roboter oder Roboterarm auch die Steuerimpulse geben, beispielsweise durch Bedienung eines Joysticks oder berührungslose Signalübertragung, z.B. durch Nahfeldkommunikation. Gerade letzteres kann den Eindruck erwecken, dass die Bewegung wie durch Zauberei erfolgt.

Eine weitere Einsatzmöglichkeit für einen solchen Roboter ist, dass die erste Steuerung und/oder die weitere Steuerung derart programmiert und eingerichtet ist, dass der Roboter mit Gästen des animierten Events interagiert. Dies kann in einer "klassischen" Aufnahme einer Bestellung bestehen, aber auch zusätzliche, unübliche Elemente enthalten. Beispielsweise kann der Roboter bestimmte Merkmale des Gastes erfassen oder ein Codewort mit ihm vereinbaren und dann später, wenn die Speisen serviert werden, diese nur nach Verifikation dieser Merkmale für den Gast freigeben bzw. diesen am Konsum der Speisen zu hindern, wenn die Verifikation scheitert oder wenn tatsächlich ein anderer Gast am selben Tisch zuzugreifen versucht.

Die maschinelle Bewegung kann insbesondere unter Verwendung eines Luftkissensystems, eines Magnetsystems, mit einem Flurfördersystem, mit einem Schienensystem oder mit einer -insbesondere abschnittsweisen- Kombination dieser Systeme erfolgt. Sofern ein aktiver Antrieb an einem Eventmobiliarbestandteil des Eventsystems vorgesehen ist, kann dieser durch Reib- oder Mecanumradanordnungen realisiert werden; insbesondere können zwei softwaremäßig miteinander koordinierte, vorzugsweise höhenverstellbare Reib- oder Mecanumräder verwendet werden.

Vorzugsweise ist die Steuerung derart programmiert und eingerichtet, dass die Vorrichtung zur sensorischen Stimulation von Gästen des animierten Events
- visuelle Inhalte bereitstellt, insbesondere visuelle Inhalte entweder auf Tische, Stühle, Bodenabschnitte, Wandabschnitte oder in dem Raum zwischen den Bestandteilen des Eventsystems oder projiziert, oder diese dem Nutzer in einer personalisierten Betrachtungsvorrichtung bereitstellt, und/oder
- maschinelle Bewegungen und/oder projizierte visuelle Inhalte akustisch untermalt, und/oder
- Geruchsstoffe freisetzt, die vorzugsweise an visuelle Inhalte oder akustische Untermalung angepasst sind, und/oder
- haptische Reize erzeugt, vorzugsweise lokal an Tischen oder Stühlen.

In einer bevorzugten Ausführungsform der Erfindung ist ferner vorgesehen, dass das Eventsystem einen oder mehrere Sensoren zur Erfassung des Verhaltens von Gästen des animierten Events aufweist, die mit mindestens einer der Steuerungen in Signalkommunikation stehen. Damit lassen sich eine Vielzahl von Effekten, aber auch sicherheitsrelevante Funktionen realisieren.

Um die komplexen Geschehnisse beim Event sicher zu überwachen und zu kombinieren, ist es vorteilhaft, wenn das Eventsystem, vorzugsweise die erste Steuerung, ein Navigationssystem aufweist, mit dem die Position von einzelnen Komponenten des Eventsystems erfasst und die Bewegung einzelner Komponenten des Eventsystems gesteuert werden kann.

Gerade wegen der Komplexität der Abläufe ist es bevorzugt, wenn das Eventsystem auch Mittel zur Anzeige eines Countdowns für Servicepersonal und ggf. auch für die Gäste aufweist.

Aus Sicherheitsgründen und zur Gewährleistung geordneter Betriebsabläufe ist es vorteilhaft, dass Bedienvorrichtungen für Eventmitarbeiter vorhanden sind, die mit der ersten Steuerung in Signalkommunikation stehen und den Eingriff in Abläufe der ersten Steuerung ermöglichen. Technisch kann dies durch eine drahtlose Verbindung ebenso realisiert werden wie durch eine Verbindung "by wire", also eine drahtgebundene Verbindung. Vorteilhafterweise weisen diese Bedienvorrichtungen Zustimm- und/oder Manipulationstasten auf, mit denen Programmabläufe gestartet, gestoppt, in vordefinierter Weise verändert oder unterbrochen werden können, so dass lediglich ein einziger Tastendruck oder wenige Tastendrücke ausreichen, um auch komplexe Vorgänge zu kontrollieren und/oder zu beeinflussen.

Auf dieses Weise kann ergänzend zu technischen Sicherheitsfunktionen eine visuelle Kontrolle bereitgestellt werden. Erkennt der entsprechende Mitarbeiter beispielsweise, dass ein Eventgast sich oder andere gefährdet, kann ein sanfter Stopp oder Notstopp auf Tastendruck herbeigeführt werden. Sollte er beispielsweise feststellen, dass bei der oben exemplarisch erwähnten Projektion von Riesenameisen ein Gast wegen einer Ameisenphobie in Panik gerät, kann gezielt an diesem Tisch die entsprechend Projektion deaktiviert werden. Auf diese Weise kann ein reibungsloser und harmonischer Verlauf des animierten Events gewährleistet werden.

Eine andere technische Möglichkeit zur Bereitstellung der vorstehend beschriebenen Funktionalitäten ist eine Sprachsteuerung, mit der -gegebenenfalls durch spezielle Sprachcodes um ein zufälliges Auslösen zu vermeiden- Sicherheitsfunktionen und/oder Showbefehle ausgelöst bzw. aktiviert werden können. Eine solche Sprachsteuerung kann aber auch in interaktiven Formaten genutzt werden, um den Gästen eine Mitwirkung zu ermöglichen.

Eine andere vorteilhafte Weiterentwicklung des Eventsystems sieht vor, dass lokal an Eventmobiliarbestandteilen, insbesondere an Tischen und/oder Stühlen, Mittel zur Interaktion mit der ersten Steuerung und/oder einer weiteren Steuerung vorgesehen sind, die somit eine Benutzerschnittstelle bilden, beispielsweise zur Beeinflussung der maschinellen Bewegung durch einen Eventgast und/oder zur Durchführung von Bestellvorgängen. Besonders bevorzugt ist eine Benutzerschnittstelle mit einem Display zur Anzeige von Informationen vorzusehen. Eine solche Benutzerschnittstelle kann dann beispielsweise als ein Touchpanel oder auch als ein spezieller, in das fragliche Eventmobiliarbestandteil integrierter Tablet-PC ausgeführt sein.

Abgesehen von der Möglichkeit, das Speisen- und Getränkeangebot anzusehen und Bestellungen aufzugeben können hier auch Informationen als Entscheidungsgrundlage für den weiteren Verlauf des Eventbesuchs vorgestellt werden und Präferenzen des Gastes für den weiteren Verlauf des Eventbesuchs abgefragt werden.

Beispielsweise könnten bei einer Einbettung der Mahlzeit in eine animierte Abenteuergeschichte mehrere Möglichkeiten einer Fortsetzung zur Abstimmung gestellt werden, so dass je nach Ausgang der jeweiligen Voten ein mehrmaliger Besuch des Events trotz thematisch gleicher Abenteuergeschichte jeweils unterschiedliche Geschichten erlebt werden. Man könnte aber auch beispielsweise im Rahmen einer Single-Börse Präferenzen für den Teilnehmer, den man beim weiteren Ablauf gerne kennen lernen würde, eingeben, gegebenenfalls unterstützt durch Kurz-Informationen zu dieser Information, die über das Display abrufbar sind.

Das erfindungsgemäße Verfahren zum Betrieb eines erfindungsgemäßen Eventsystems zeichnet sich dadurch aus, dass eine maschinelle Bewegung mindestens eines Restauranmobiliarteils und/oder des mindestens einen Bodenabschnitts und die Ausgabe der Vorrichtung zur sensorischen Stimulation von Gästen des animierten Events durch die erste Steuerung automatisch miteinander synchronisiert werden.

Besonders bevorzugt ist es bei diesem Verfahren, wenn die Speisen automatisiert auf dem Tisch bereitgestellt werden. Das kann nicht nur zu einer Senkung der Personalkosten beitragen, sondern erschließt auch eine Vielzahl von Spezialeffekten, um den Eventbesuch noch unterhaltsamer werden zu lassen.

Die erste Steuerung und/oder eine andere Steuerung kann auch mindestens einen Roboter oder Roboterarm steuern. Dies kann insbesondere dafür eingesetzt werden, dass der Roboter bei der automatisierten Bereitstellung von Speisen auf dem Tisch mitwirkt oder dafür, dass der Roboter mit Eventbesuchern interagiert.

Eine solche Interaktion kann besonders interessant gestaltet werden, wenn der Roboter oder Roboterarm für die Interaktion mit einer Büste ausgestattet ist, auf die Gesichter projiziert werden können. Dies können beispielsweise die Gesichter berühmter Persönlichkeiten sein, aber auch anderes Bildmaterial, z.B. aus Fotos oder Videos, die im Vorfeld von Angehörigen oder Freunden aufgenommen wurden. Vorzugsweise ist auch die Stimme des Roboters oder Roboterarms entsprechend angepasst. Beispielsweise kann in einem solchen Fall der Roboterarm auf den Gast zugefahren kommen, und der Gast wird von einem Gesicht, das wie das seiner Mutter aussieht in deren Stimme gefragt, was er essen will oder wo er sich wieder rumgetrieben hat.

Vorteilhafte Betriebsmodi der Vorrichtung können vorsehen, dass die Vorrichtung zur sensorischen Stimulation von Gästen des animierten Events
- visuelle Inhalte bereitstellt, insbesondere visuelle Inhalte entweder auf Tische, Stühle, Bodenabschnitte, Wandabschnitte oder in dem Raum zwischen den Bestandteilen des Eventsystems oder projiziert, oder diese dem Nutzer in einer personalisierten Betrachtungsvorrichtung bereitstellt, und/oder
- maschinelle Bewegungen und/oder projizierte visuelle Inhalte akustisch untermalt, und/oder
- Geruchsstoffe freisetzt, die vorzugsweise an visuelle Inhalte oder akustische Untermalung angepasst sind, und/oder
- haptische Reize erzeugt, vorzugsweise lokal an Tischen oder Stühlen.

Die Erfindung wird nachfolgende anhand von Figuren, die Ausführungsbeispiele darstellen, näher erläutert. Es zeigt:
- Fig. 1:: ein Plan eines Beispiels für ein Eventsystem, betrachtet von oben,
- Fig. 2:: ein Beispiel für ein im Raum bewegbares Eventmobiliarbestandteil in Form einer Tisch-Stuhl-Kombination,
- Fig. 3:: ein schematisches Beispiel für eine Tischformation, die mit den im Raum bewegbaren Eventmobiliarbestandteilen aus Figur 2 realisierbar ist,
- Fig.4:: ein Beispiel für eine Interaktion mit einem Roboter-Arm,
- Fig.5a:: einen Querschnitt durch einen der Tische für 4 Personen aus Figur 3 während einer ersten Phase einer möglichen Beschickung mit Speisen,
- Fig.5b:: einen Querschnitt durch einen der Tische für 4 Personen aus Figur 3 während einer zweiten Phase einer möglichen Beschickung mit Speisen,
- Fig.6:: ein schematisches Beispiel für eine erste Tischformation, bei der die im Raum bewegbaren Eventmobiliarbestandteilen aus Figur 2 an ein Buffetmodul angedockt sind,
- Fig.7:: ein schematisches Beispiel für eine zweite Tischformation, bei der die im Raum bewegbaren Eventmobiliarbestandteilen aus Figur 2 an ein Buffetmodul angedockt sind,
- Fig.8:: ein Beispiel für den Einsatz eines Roboterarms bei der Bewegung von im Raum bewegbaren Eventmobiliarbestandteilen bzw. einer daraus zusammengesetzten Tischformation,
- Fig.9:: ein schematisches Beispiel für eine Tischformation, bei der die im Raum bewegbaren Eventmobiliarbestandteilen aus Figur 2 an ein Show-Cooking-Modul angedockt sind,
- Fig.10:: ein Beispiel für den Einsatz eines Roboterarms bei der Versorgung einer Tischformation mit Speisen,
- Fig.11:: ein Aufbauschema für eine Steuerung,
- Fig.12a:: eine Seitenansicht eines zweiten Beispiels für ein Eventsystem,
- Fig.12b:: einen Plan des zweiten Beispiels für ein Eventsystem, betrachtet von oben,
- Fig.12c:: eine Weiterbildung des Eventsystems gemäß Figur 12a,
- Fig.12d:: eine Detaildarstellung des Eventsystems gemäß Figur 12c,
- Fig.13:: eine erste Variante des Eventmobiliarbestandteils aus Figur 2, und
- Fig.14:: eine zweite Variante des Eventmobiliarsystems aus Figur 2.

Gleiche Objekte werden in allen Figuren mit denselben Bezugszeichen versehen, sofern nichts anderes erwähnt ist. Um die Übersichtlichkeit der Figuren zu erhöhen sind aber nicht in jeder Figur immer alle Bezugszeichen eingetragen.

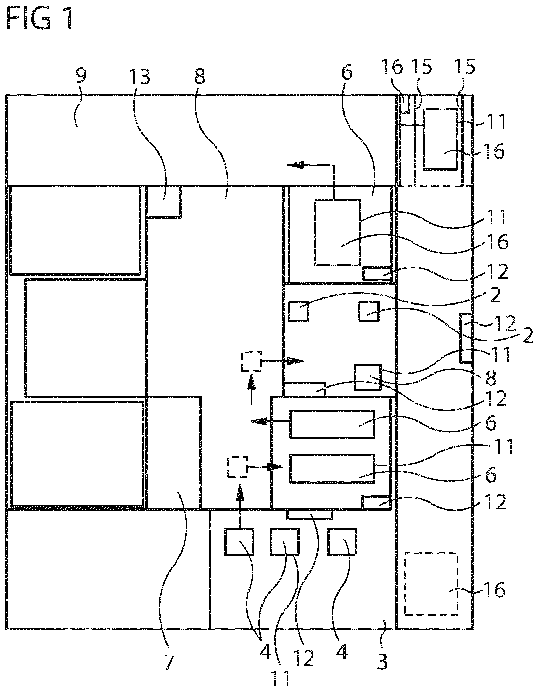

Figur 1 veranschaulicht ein Beispiel für ein Eventsystem 10 für ein animiertes Event, das in einem Restaurant mit Barbereich 9, Erlebnisbereich 2, Vorspeisenbereich 3, zwei Bereichen für Hauptgänge 4,5, einem Dessertbereich 6 sowie Sanitärbereich 7 und Küchenbereich 8 betrieben wird und beispielsweise mit dem Thema "Weltraumreise" betrieben werden kann.

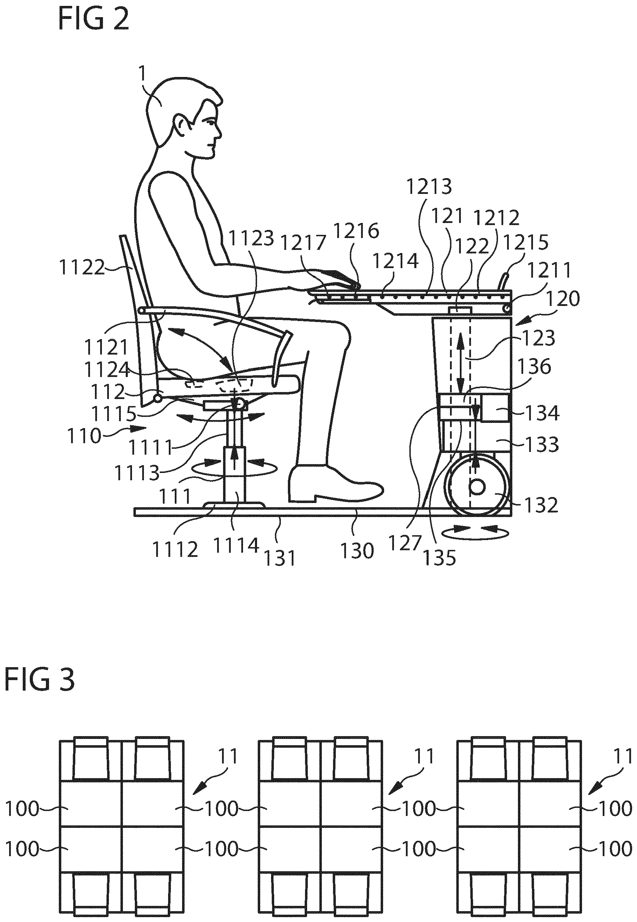

Das Eventsystem 10 hat eine Reihe von Besonderheiten: Eine erste Besonderheit ist, das insbesondere die Tische 11 mit zugehörigen Stühlen, die in Figur 1 als Rechteck symbolisiert werden und deren aktuelle Platzzahl jeweils in das Rechteck eingetragen sind, durch Gruppen von Eventmobiliarbestandteilen mit Bewegungsmitteln für eine maschinelle Bewegung im Raum gebildet, werden, die exemplarisch jeweils einen Stuhl und einen Tisch aufweisen, wie sie nun anhand der Figur 2 näher erläutert werden:
Figur 2 zeigt ein Beispiel für ein maschinell im Raum bewegbares Eventmobiliarbestandteil 100, das in diesem Fall als ein Stuhl 110, der gemeinsam mit einem Tisch 120 auf einer Bodenplatte 130 angeordnet ist, ausgeführt ist. Dabei ist die Position des Stuhls 110 relativ zum Tisch 120 durch ein Traggestell 111 veränderbar, mit dem eine Sitzfläche 112 mit Armlehnen 1121 und beweglicher Rückenlehne 1122 über eine Schnellkupplung 1111 verbunden ist, so dass die Sitzfläche 112 mit den an ihr angeordneten Anbauteilen einfach und zügig auswechselbar ist, beispielsweise bei einem Wechsel des Themas des Eventsystems oder bei einem Wechsel der Zielgruppe, etwa wenn nachmittags ein Kindergeburtstag stattgefunden hat und abends eine Speed-Dating-Veranstaltung erfolgen soll.

Das Traggestell 111 weist einen Verschiebemechanismus 1112 für die Verschiebung des Stuhls 110 auf den Tisch 120 zu und vom Tisch 120 weg, einen Hubmechanismus 1113 zur Veränderung der Sitzhöhe relativ zur Bodenplatte 130, einen Rotationsmechanismus 1114 zur Drehung um eine Achse senkrecht zur Bodenplatte 130 und einen Kippmechanismus 1115, der bevorzugt eine Kippbewegung entlang einer Kulisse realisiert, um den Drehpunkt an die Lage des durchschnittlichen Körperschwerpunkts zu verlegen, auf. Optional können diese Mechanismen auch angetrieben sein, beispielsweise durch Elektromotoren, und mit einer Steuerung über drahtlose Kommunikationsmittel angesteuert werden.

In der Sitzfläche 112 selbst ist in diesem Ausführungsbeispiel ebenfalls eine Einrichtung zur sensorischen Simulation 1123 eines Gästen 1 des animierten Events aufgenommen, die hier exemplarisch ein Vibrationselement ist. Diese Einrichtung zur sensorische Stimulation 1123 wird von einer ersten Steuerung angesteuert, beispielsweise über eine drahtlose Verbindung. Die Ansteuerung ist insbesondere synchronisiert zu einer maschinellen Bewegung des Eventmobiliarbestandteils 100. Dies lässt sich auf vielfältige Weise nutzen - beispielsweise, zur Untermalung der maschinellen Bewegung, etwa um bei einer Fahrbewegung den Eindruck einer holprigen Piste zu vermitteln, aber auch als Signal, dass demnächst eine Bewegung erfolgen wird, auf die der Gast 1 sich vorbereiten sollte.

In der Sitzfläche 112 ist darüber hinaus auch ein Sensor 1124 zur Erkennung der Sitzbelegung integriert, auf dessen Daten die erste Steuerung ebenfalls zurückgreifen kann, beispielsweise im Rahmen einer Sicherheitsüberprüfung, ehe die maschinelle Bewegung eingeleitet wird, oder um an einem leeren Platz Effekte einzusparen. Ein Bedienelement 1125, das auch als Sensor ausgeführt sein kann, und dessen Zustand von der Steuerung ausgelesen wird ist an der Armlehne 1122 angeordnet; mit kann beispielsweise eine Quittierung einer Bewegung bewirkt werden oder signalisiert werden, dass der Gast 1 für eine bevorstehende Bewegung nun bereit ist.

Die Armlehnen 1122 können vorzugsweise auch in der Höhe verfahren und voll abgesenkt werden, was einerseits zur Erfüllung Content-spezifischer Erfordernisse und andererseits zum Hervorrufen von Überraschungseffekten genutzt werden kann. Hierzu kann in der Rückenlehne eine zentrale Führung mit Antrieb integriert sein.

Der Tisch 120 weist eine Tischplatte 121 auf, die über eine Schnellkupplung 122 mit einem bevorzugt höhenverstellbaren Gestell 123 verbunden ist, das auf der Bodenplatte 130 befestigt ist. Die Tischplatte 121 weist in diesem Ausführungsbeispiel eine Vielzahl von Komponenten auf, die aber auch einzeln oder in Gruppen verwendet werden können und voneinander weitestgehend unabhängig sind.

An den Rändern der Tischplatte 121 können beispielsweise Sender und/oder Empfänger 1211 angeordnet sein, die die Bestimmung von Position und Lage des Eventmobiliarbestandteils 100 im Raum ermöglichen und bevorzugt in ein Navigationssystem eingebunden sind, das insbesondere eine Ortung der Positionen sämtlicher Eventmobiliarbestandteile vornimmt.

Sofern ein solches Navigationssystem vorhanden ist, kann diese Ortung auch mit den Signalen von Kontaktschlaufen, die im Boden verlaufen, unterstützt werden.

Die Ränder der Tischplatte 121 können auch Abstandssensoren 1212 aufweisen, mittels denen die Kopplungsvorgänge zwischen unterschiedlichen Eventmobiliarbestandteilen 100 überwacht werden und oder Sicherheitssensoren 1213 aufweisen, zum Beispiel in Form von Drucksensoren oder optischen Sensoren, die sicher verhindern, dass im Rahmen der maschinellen Bewegung ein Körperteil eines Gastes, das sich gerade im Randbereich einer Tischplatte 121 befindet, eingeklemmt werden oder anzeigen, dass der Gast für die nächste Aktion bereit ist.

Noch weiter können Mittel zur Erzeugung von Spezialeffekten 1214, also weitere Vorrichtungen zur sensorischen Stimulation, mittelbar oder unmittelbar an der Tischplatte 121 angeordnet sein, z.B. LEDs, Düsen zum Freisetzen von Nebel, Feuchtigkeit, Vibrationselemente oder Ähnliches.

Beispielsweise kann um Eventmobiliarbestandteile ein virtueller Schutzmantel mit verschiedenen Sicherheitszonen gelegt werden, um den Verkehr und Kopplungsvorgänge sicher und effizient zu regeln, wobei dann z.B. Geschwindigkeiten und Antriebskräfte vorsorglich reduziert werden, wenn ein anderes Eventmobiliarbestandteil oder sonstiges Objekt in der Sicherheitszone geortet wird. Es könnte aber z.B. auch als Zusatzeffekt im kritischen und finalen Kopplungsvorgang rot eingefärbter oder rot ausgeleuchteter Nebel austreten und/oder ein Soundeffekt ausgegeben oder ein Bereich bei Berührung in Vibration versetzt werden. Dabei sollten die entsprechenden Zonen frei programmierbar sein.

Auf der Tischplatte 121 können auch Displays 1215,1216 angeordnet sein, die vorzugsweise mit der Tischplatte 121 verbunden oder in sie integriert sind. Auch diese stellen weitere Vorrichtungen zur sensorischen Stimulation dar; sie können den Gast 1 informieren oder unterhalten. Wenn die Displays 1215, 1216 als Touch-Display ausgestaltet sind, können sie auch als Eingabemittel und Bedienelement für den Gast 1 dienen, es können aber auch separate Bedienelemente 1217, wie hier ein ausziehbar gelagertes Bedienfeld dazu vorhanden sein.

Auf einem solchen Display 1215,1216 am zugewiesenen Platz kann insbesondere das Abrufen personalisierter Inhalte, die der Gast bei der Anmeldung freiwillig offenbart hat, möglich sein. Dies kann ebenfalls synchronisiert erfolgen.

Ferner könnte im Bereich der Displays am oder auf dem Tisch eine Art Jude Box integriert sein, wo gewisse zum Content passende Varianten, z.B. in Form von Film-, Bild-, Ton- oder Lichtinhalten, hinterlegt sind, zwischen denen -ggf. nach Mehrheitsbeschluss aller Gäste- ausgewählt werden kann.

Es können auch spielerische interaktive Möglichkeiten, insbesondere mit Bezug zum jeweiligen Content, angeboten werden, mit denen sich der Gast dann z.B. eine Belohnung verdienen kann. Beispielsweise könnte er die Aufgabe erhalten, bestimmte versteckte Merkmale im Content während des Events zu identifizieren und zu quittieren, dafür auf einem Bonuskonto Punkte gut geschrieben bekommen und für diese dann im weiteren Verlauf des Besuchs Zusatzleistungen erhalten, z.B. einen zusätzlichen Gang oder ein Spezialgetränk.

Um das Gestell 123 herum ist ein Gehäuse 127 angeordnet, das einen geschützten Technikraum für in seinem Inneren aufgenommene, für den Betrieb des Eventmobiliarteils und insbesondere einige der für die maschinelle Bewegung notwendigen Komponenten bildet.

Die Bewegungsmittel für eine maschinelle Bewegung lassen sich folgendermaßen kategorisieren:
Solche Mittel für eine maschinelle Bewegung eines Objekts und insbesondere eines maschinell beweglichen Eventmobiliarbestandteils lassen sich generell folgendermaßen kategorisieren:
Erstens gibt es Tragmittel, die das zu bewegende Objekt in eine Position bringen bzw. dort halten, in der es ohne signifikante Reibung bewegt werden kann. Beispiele für solche Tragmittel sind Räder oder (Kugel-)Rollen, Luftkissen, sie können aber auch durch geeignete Magnetsysteme realisiert werden. Offenkundig ist diese Art von Bewegungsmittel für eine maschinelle Bewegung zwingend erforderlich.

Zweitens gibt es Antriebsmittel, die die eigentliche Bewegung des zu bewegenden Objekts erzeugen. Diese können je nach Ausführung auch eine Funktion als Tragmittel erfüllen bzw. mit diesen zusammenfallen, wie es etwa bei angetriebenen Rädern, insbesondere Reib- oder Mecanumrädern, oder Räderachsen der Fall ist. Solche Antriebsmittel müssen aber nicht zwingend vollständig am zu bewegenden Objekt angeordnet sein, wohl aber zumindest eine Teilkomponente, mit der dann ein nicht am zu bewegenden Objekt angeordnetes Teil der Antriebsmittel gekoppelt ist, beispielsweise bei einem Magnetsystem über magnetische Wechselwirkung oder über einen mechanischen Eingriff, z.B. bei einem System mit Förderketten.

Drittes gibt es Steuerungsmittel, die dem Antriebsmittel die auszuführende Bewegung vorgeben. Diese können lokal am zu bewegenden Objekt oder nicht am zu bewegenden Objekt vorhanden sein. Im ersten Fall können sie so ausgeführt sein, dass sie teilautonom agieren, wie z.B. bei Flurtransportsystemen oder bei Konzepten zum autonomen Fahren bei Fahrzeugen. Im zweiten Fall erhalten die Antriebmittel die Steuerbefehle von einer externen Steuerung. Es sind auch Mischfälle möglich, in denen eine untergeordnete Steuerung lokal am zu bewegenden Objekt vorhanden ist, aber auch Steuerbefehle von einer nicht am zu bewegenden Objekt angeordneten übergeordneten Steuerung empfängt und ausführt.

Viertens ist in allen Fällen zur Realisierung der erfindungsgemäßen Synchronisation im Regelfall zumindest ein Kommunikationsmodul am zu bewegenden Objekt vorhanden, mit dem Steuerbefehle und Daten mit einer anderen Steuerung ausgetauscht werden können.

Fünftens können auch Betriebsmittelspeicher und/oder Betriebsmittelerzeuger einen wesentlichen Bestandteil der Mittel zur maschinellen Bewegung bilden, beispielsweise bei einem System mit Luftkissen ein Druckluftreservoir als Betriebsmittelspeicher und ein Kompressor als Betriebsmittelerzeuger, beziehungsweise beispielsweise ein Speicherkondensator (CAP), ein Superkondensator super CAP, eine Batterie oder ein Akku als Betriebsmittelspeicher für den Bedarf eines lokalen, elektrisch angetriebenen Antriebsmittels, einer lokalen Steuerung und/oder des Kommunikationsmoduls oder Mittel zur induktiven Stromübertragung als Betriebsmittelerzeugung.

Bei dem in Figur 2 dargestellten Ausführungsbeispiel eines maschinell beweglichen Eventmobiliarbestandteils 100 sind an der Unterseite der Bodenplatte 130 die Tragmittel 131 vorgesehen, die z.B. als Luftkissen-Pads , Magnete, Kugelrollen oder dergleichen ausgeführt sein können.

Als Antriebsmittel ist bei dem in Figur 2 dargestellten Ausführungsbeispiel eines maschinell beweglichen Eventmobiliarteils mindestens ein elektrisch angetriebenes Reibrad 132, vorzugsweise ein Paar von elektrisch angetriebenen Reibrädern 132, um eine bevorzugt vertikal verlaufende Achse drehbar angeordnet, wobei auch diese Drehbewegung angetrieben ist. Vorzugsweise ist diese Drehbarkeit am Quadrantenpunkt des Reibrads 132 realisiert. Unabhängig davon bevorzugt ist es, wenn die Drehung mit einer möglichst hohen Auflösung der Winkelinkremente realisiert wird.

Zusätzlich ist ein angetriebener Höhenverstellmechanismus 133 für das elektrisch angetriebene Reibrad 132 oder das Paar von elektrisch angetriebenen Reibrädern vorhanden, um eine Feinjustage der Lastenverteilung und des Anpressdrucks zu ermöglichen. Es versteht sich von selbst, dass die Bodenplatte 130 eine Öffnung aufweist, durch die hindurch die Reibräder 132 in Kontakt mit dem Boden stehen. Natürlich kann eine solche Anordnung in gleicher Weise mit Mecanum-Rädern realisiert werden.

Die Reibräder 132 inklusive ihres elektrischen Antriebs und des Höhenverstellmechanismus 133 sind gemeinsam mit einem Betriebsmittelspeicher 134, hier konkret einer Batterie für die Stromversorgung der elektrischen Komponenten und im Fall der Verwendung eines Luftkissens einem Druckluftspeicher sowie lokalen Steuerungsmitteln 135 und einem Kommunikationsmodul 136, das bevorzugt drahtlos arbeitet und die Signalkommunikation mit der Steuerung 13 herstellt, im Gehäuse 127 untergebracht.

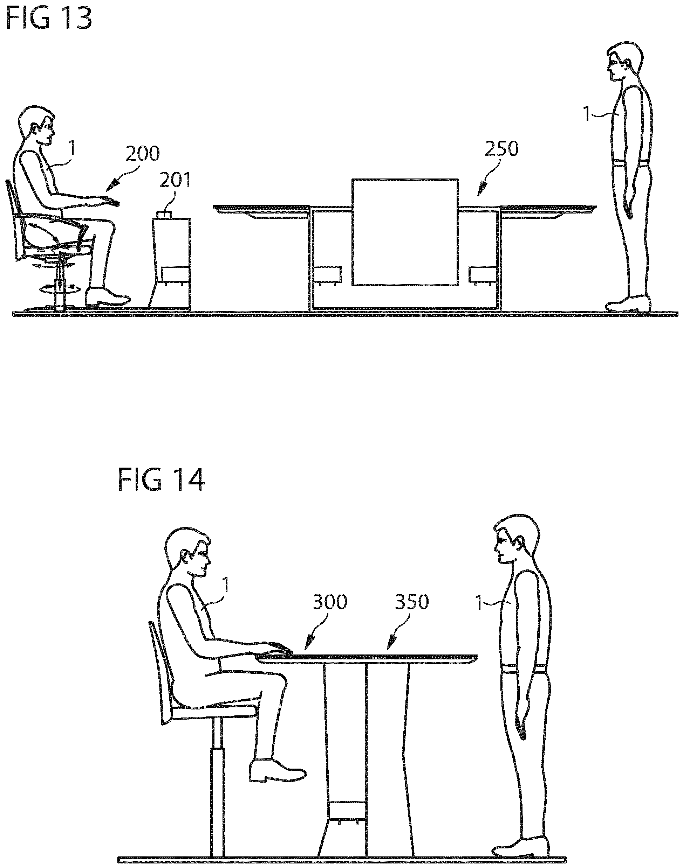

Wie die Figuren 13 und 14 verdeutlichen, sind aber auch andere Eventmobiliarbestandteile 200,250,300,350 mit Mitteln zur maschinellen Bewegung denkbar, die nicht sowohl eine Sitzmöglichkeit und einen Tischbestandteil aufweisen. In Figur 13 ist konkret eine Variante mit einem Eventmobiliarbestandteil 200 gezeigt, das sich von dem Eventmobiliarbestandteil 100 dadurch unterscheidet, dass es keine Tischplatte aufweist und dementsprechend auch die an der Tischplatte 121 des Eventmobiliarbestandteils 100 angeordneten Bauteile entfallen. Dafür ist hier der Tisch -der optional auch ein Anbauteil einer Buffetvorrichtung sein kann- als eigenes Eventmobiliarbestandteil 250 mit -zur Ausführungsform der Figur 2 identischen- Mitteln zu maschinellen Bewegung ausgeführt, an den der separate Stuhl, der das Eventmobiliarbestandteil 200 bildet, mit einer optionalen Kopplungsvorrichtung 201 angekoppelt werden kann.

Die in Figur 14 dargestellte Variante ist insbesondere für Fälle, in denen eine Bar-artige Atmosphäre gewünscht ist geeignet, beispielsweise wenn eine Veranstaltung wie ein Speed-Dating das Thema des animierten Events ist. Das Eventmobiliarbestandteil 300 ist grundsätzlich identisch zum Eventmobiliarbestandteil 100 aufgebaut und unterscheidet sich von diesem primär im Hinblick auf die Tischhöhe und die Höhe des Stuhls. Das Eventmobiliarbestandteil 350 weist gar keine Sitzmöglichkeit, sondern nur einen (Steh)-Tisch auf, der Gast steht hier während der Bewegung auf einer Bodenplatte 350. Die Mittel zur maschinellen Bewegung und die Sensorik können aber sowohl für das Eventmobiliarbestandteil 300 als auch für das Eventmobiliarbestandteil 350 jeweils genauso ausgeführt werden wie oben für das Eventmobiliarbestandteil 100 beschrieben wurde.

Als Konsequenz aus der Tatsache, dass die Eventmobiliarbestandteile 100, 200, 250, 300, 350 mit Bewegungsmitteln für eine maschinelle Bewegung im Raum ausgestattet sind, kann eine erste Steuerung eine Bewegung insbesondere dieser Eventmobiliarbestandteile im Raum steuern. Beispielsweise kann eine Anzahl von Tischen gemeinsam durch das Restaurant gefahren werden und dann in andere Gruppen von Tischen mit zugehörigen Stühlen 11 zerfallen oder sich rekonfigurieren.

Eine zweite Besonderheit des Eventsystems 10 besteht darin, dass es -hier lediglich schematisch dargestellte- Vorrichtungen 12 zur sensorischen Stimulation von Gästen des animierten Events aufweist, die hier auf die unterschiedlichen Bereiche verteilt sind. Insbesondere ist dies hier als eine visuelle Stimulation durch Projektionsapparate und Unterlegung dieser visuellen Effekte durch Soundeffekte realisiert, wie im Folgenden deutlich wird, können aber auch olfaktorische Effekte durch Freisetzung von Aromastoffen oder haptische Effekte, z.B. Vibrationen, Sprühnebel, Luftströmungen oder Ähnliches realisiert werden. Dabei kann der Output der sensorischen Stimulation je nach gewünschtem Thema durch entsprechende Programmierung leicht angepasst werden; sogar eine Individualisierung des Contents kann möglich sein.

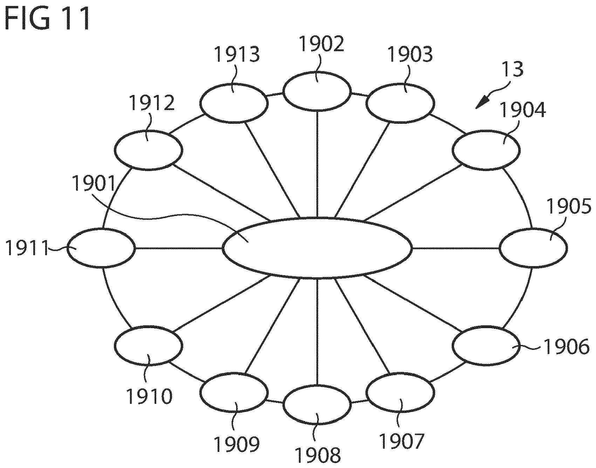

Die dritte Besonderheit des Eventsystems 10 besteht darin, dass Bewegung der Eventmobiliarbestandteile und sensorische Stimulation der daran angeordneten Gäste 1 dabei durch einen Bestandteil einer Steuerung 13, die ebenfalls in Figur 1 nur schematisch gezeigt ist, aber nun anhand der Figur 11 näher erläutert wird, miteinander synchronisiert werden.

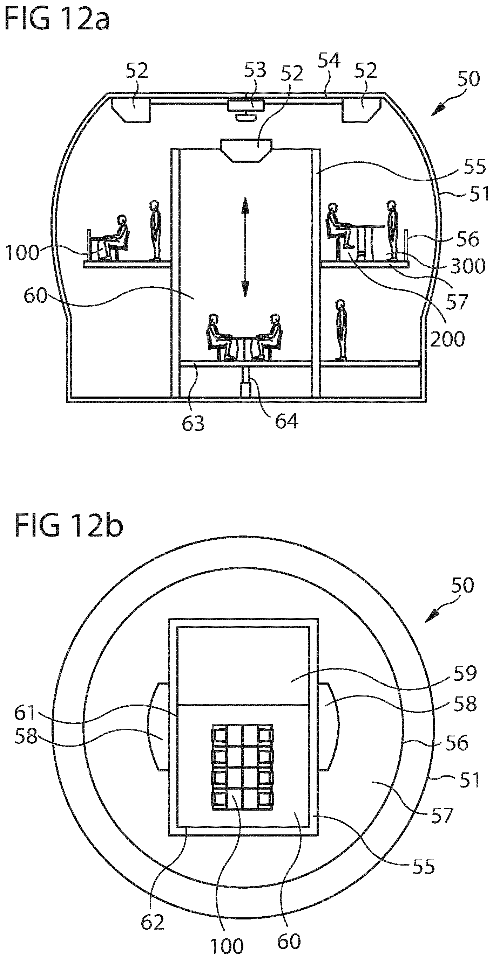

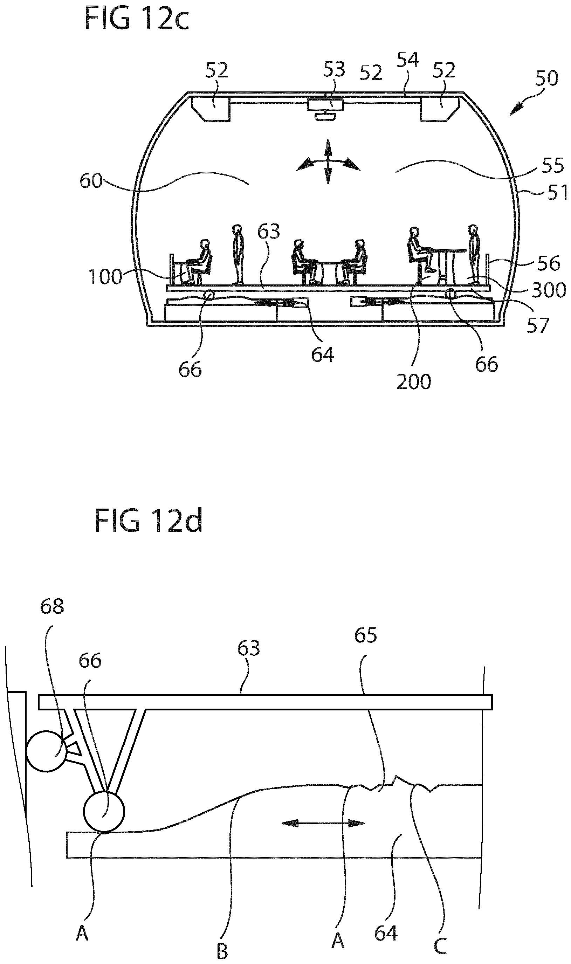

In der Ausführungsfigur der Figur 12 ist die Steuerung 13 so aufgebaut, dass die erste Steuerung 1901, welche erfindungsgemäß eingerichtet ist, um die maschinelle Bewegung und die Ausgabe der Vorrichtung zur sensorischen Stimulation von Gästen des animierten Events miteinander synchronisiert zu steuern, durch eine Master- oder Hauptsteuerung gebildet wird. Diese erste Steuerung 1901 steht in Signalkommunikation mit einer Vielzahl von untergeordneten Steuerungen, von denen sie Daten empfängt und denen sie Steuerkommandos gibt, nämlich insbesondere
- eine Stuhl-Steuerung 1902, mit der die Bewegungsfreiheitsgrade und Spezialeffekte, wie z.B. die Vibration des Stuhls 110 des Eventmobiliarbestandteils 100 gesteuert werden und Sensordaten von am Stuhl 110 angeordneten Sensoren an die erste Steuerung 1901 weitergeleitet werden,
- eine Tisch-Steuerung 1903, mit der die Bewegungsfreiheitsgrade und Spezialeffekte des Tisches 120 des Eventmobiliarbestandteils 100 gesteuert werden und Sensordaten von am Tisch 120 angeordneten Sensoren an die erste Steuerung 1901 weitergeleitet werden,
- eine Lichtsteuerung 1904, mit der Beleuchtung und Lichteffekte in den unterschiedlichen Bereichen des animierten Events gesteuert werden,
- eine Gebläse-Steuerung 1905, mit der lokal und global vorgesehene Gebläse zur Umwälzung der Luft und zur Erzeugung von haptischen Effekten durch den Luftstrom gesteuert werden,
- eine Buffet-Steuerung 1906, mit der insbesondere Eventmobiliarbestandteile in Form von maschinell bewegten Buffets im Raum bewegt werden und die deren Koordinaten der ersten Steuerung 1901 zur Navigation übermittelt,
- eine Roboter-Steuerung 1907, mit der insbesondere Eventmobiliarbestandteile in Form von maschinell bewegten Robotern im Raum bewegt werden, die deren Interaktion mit Gästen und Umgebung steuert und die deren Koordinaten der ersten Steuerung 1901 zur Navigation übermittelt,
- eine Sound-Steuerung 1908, mit der die Soundeffekte beim Betrieb des animierten Events erzeugt und koordiniert werden,
- eine Projektions-Steuerung 1909, mit der die visuellen Effekt, insbesondere die Projektionen beim Betrieb des animierten Events erzeugt und koordiniert werden,
- eine Navigations-Steuerung 1910, mit der insbesondere die Bewegung der maschinell bewegten Eventmobiliarbestandteile 100 gesteuert und überwacht wird,
- eine Kalibriersteuerung 1911,
- eine Operator-Steuerung 1912, mit der Eventmitarbeiter über ein Bediengerät einerseits aktiv in den Ablauf des animierten Events eingreifen können und die andererseits den Eventmitarbeitern Informationen gibt, wenn bestimmte Betriebsmaterialien knapp werden,
- eine Dockingstations-Steuerung 1913, mit der das Aufladen der Eventmobiliarbestandteile 100 mit Strom, Druckluft und/oder weiteren Verbrauchsmaterialien durch eine Dockingstation gesteuert wird, und
- eine Bodenbewegungs-Steuerung 1914, mit der Bewegungsfreiheitsgrade und Spezialeffekte, wie z.B. die Vibration und Bewegungen eines Bodenabschnitts 63 oder eines Bodens, auf dem das Eventmobiliar im Raum angeordnet sein kann, gesteuert werden können und Sensordaten von am Bodenabschnitt 63 angeordneten Sensoren an die erste Steuerung 1901 weitergeleitet werden können.

Um das Wirkungsprinzip des Eventsystems 10 verständlicher werden zu lassen, soll nun ein exemplarischer Betrieb mit dem Thema "Weltraumreise" beschrieben werden.

Dabei betreten die Gäste zunächst den Barbereich 1, der beispielsweise wie ein Hangar eines Weltraumbahnhofs eingerichtet sein kann und warten dort bei einem Aperitif bis alle eingetroffen sind, sich für eine bestimmte Speisefolge entschieden haben und das Eventmobiliar einsatzbereit ist.

Anschließend öffnet sich eine Tür zum Erlebnisbereich 2, wobei den Gästen durch Projektion beispielsweise mittels der Vorrichtung zur sensorischen Stimulation 12 im Barbereich 1 suggeriert werden kann, es handele sich um die Tür eines Raumschiffs, das sie nun betreten.

Im nun betretenen Abschnitt des Erlebnisbereichs 2 finden die Gäste zunächst einen Tisch 11 mit 12 Plätzen vor, der - was aber zunächst gar nicht unbedingt erkennbar sein muss, sondern sogar zur Erzielung von Überraschungseffekten kaschiert werden kann, insbesondere mittels der Vorrichtung zur sensorischen Stimulation 12 durch eine geeignete Projektion - eigentlich aus 12 einzelnen Eventmobiliarbestandteilen, z.B. den Stuhl-Tisch-Baugruppen 100, die oben im Zusammenhang mit Figur 2 Detail beschrieben wurden, besteht, die jeweils einzeln maschinell beweglich sind.

Anzumerken ist, dass insbesondere dieser Bereich auch gut dafür geeignet ist, Docking-Stationen 16 bereitzustellen, an denen die Eventmobiliarbestandteile mit Betriebsmitteln wie z.B. Strom in Form von Aufladung eines Akkumulators, Pressluft, Betriebsmitteln für Spezialeffekte und dergleichen mehr versorgt werden; erstens weil damit am Anfang des Events sichergestellt werden kann, dass die während des Ablaufs nötigen Betriebsmittel vorhanden sind und zweitens weil an dieser Stelle die Eventmobiliarbestandteile üblicherweise eine ganze Weile an einer Stelle stehen bleiben.

Nachdem sich alle Gäste gesetzt haben und ein Quittiersignal gegeben wurde, beginnt ein Countdown 14 herunterzulaufen, der mit einem durch die Vorrichtung zur sensorischen Stimulation 12 im Erlebnisbereich 2 simulierten Raketenstart endet.

Beim Raketenstart setzt sich zu entsprechender akustischer Untermalung durch die Vorrichtung zur sensorischen Stimulation 12 im Erlebnisbereich 2 der Tisch 11 mit 12 Plätzen in Bewegung, wozu durch die Steuerung 13 die zwölf einzelnen Eventmobiliarbestandteile gemeinsam und synchron durch den Erlebnisbereich 2 bewegt werden. Durch die Steuerung 13 wird synchronisiert mit dieser Bewegung die Vorrichtung zur sensorischen Stimulation 12 im Erlebnisbereich 2 veranlasst, sich bewegende Bilder auf die Wände des Erlebnisbereichs 2 zu projizieren, um den Eindruck der Raketenbewegung zu erzeugen. Zusätzlich kann eine Untermalung durch Soundeffekte erfolgen.

Eine besonders überzeugende Wahrnehmung kann geschaffen werden, wenn maschinell bewegliche Wand-, Trenn- oder Sichtschutzelemente 15 mit Fenstern durch die Steuerung synchron mit dem Tisch 11 mit 12 Plätzen verfahren werden, so dass die sich bewegende Projektion auf die Wände des Erlebnisbereichs 2 durch die Fenster verfolgt wird und der Eindruck, sich ortsfest in einem Raumschiff zu befinden, auf diese Weise noch weiter verstärkt wird.

Ferner können weitere Effekte durch dieselbe oder eine andere Vorrichtung zur sensorischen Stimulation 12 hervorgebracht werden, um das Erlebnis der Weltraumreise zu verstärken. Beispielsweise können Vibrationsmittel, die in den Stühlen der Eventbestandteile angeordnet sind, während der Startsequenz von der Steuerung in Vibration versetzt werden.

Am Ende des so vorgegaukelten "Weltraumflugs" kann beispielsweise die Ankunft an einer Raumstation projiziert werden. Ein maschinell bewegtes Wand-, Trenn- oder Sichtschutzelement 15 wird in den Boden abgesenkt und der als anderer Hangar ausgestalteter Vorspeisenbereich 3 öffnet sich für den Blick der Gäste. Zum Erstaunen derselben beginnt sich nun aber der Tisch 11 für 12 Personen, an dem sie bislang gemeinsam gesessen haben, zu teilen, und die einzelnen Eventmobiliarbestandteile 100 führen eigenständig unter Kontrolle der Steuerung 13 maschinelle Bewegungen durch, die sie im Endeffekt beispielsweise zu vier Tischen 11 für vier Personen, die sich mittels maschineller Bewegung an vorgegebenen Stellen in Raum aus jeweils vier Eventmobiliarbestandteilen 100 gemäß Figur 2 konfiguriert haben, werden lassen, also einer Konfiguration, wie sie exemplarisch in Figur 3 skizziert ist. Natürlich sind auch andere Gruppierungen möglich.

Die Art und Weise, nach der diese Konfiguration erzeugt wird, kann auf unterschiedliche Weise festgelegt werden. Beispielsweise kann sie sich nach einer vorher, beispielsweise im Barbereich 1 abgegebenen Bestellung richten, so dass jeweils die Personen, die dieselbe Vorspeise essen wollen, an demselben Tisch für mehrere Personen landen oder die Zahl der an jedem Tisch vorhandenen unterschiedlichen Vorspeisen maximiert wird.

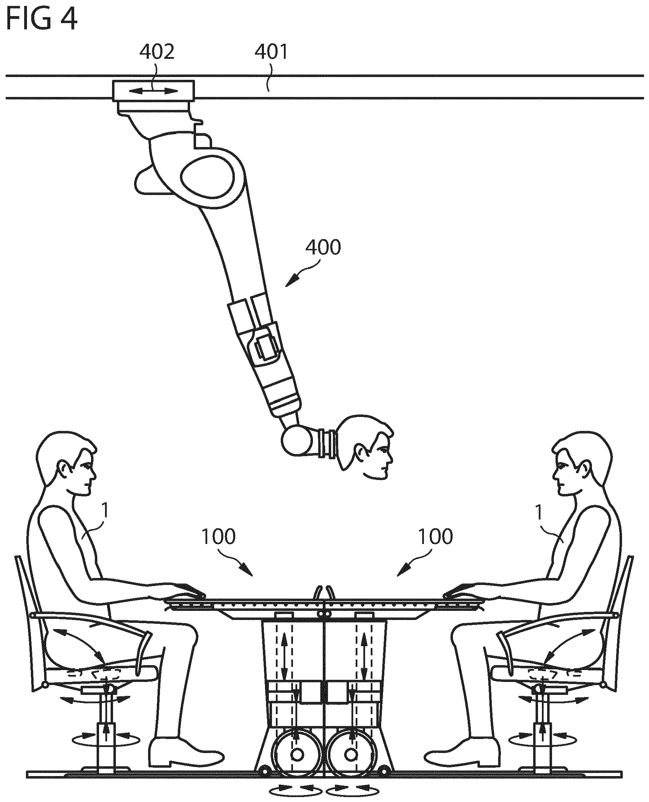

Eine unter Erlebnisaspekten sehr reizvolle Variante kann darin bestehen, dass der Gruppierung der Eventmobiliarbestandteile eine Interaktion mit einem weiteren maschinell beweglichen Eventmobiliarbestandteil in Form eines Roboters oder Roboterarms 400, wie er nun anhand der Figur 4 näher beschrieben wird, vorangeht.

In Figur 4 sind zwei Exemplare von maschinell beweglichen Eventmobiliarbestandteilen 100, wie sie oben im Kontext der Figur 2 beschrieben wurden, in miteinander verbundenem Zustand und mit darauf angeordnetem Gast 1 dargestellt. Ferner erkennt man ein weiteres Eventmobiliarbestandteil in Form eines von einer Führungsschiene 401 herabhängenden Roboters oder Roboterarms 400 mit Hilfe seiner angetriebenen automatisierten Antriebseinheit als Bewegungsmittel 402 zur Ausführung einer maschinellen Bewegung.

Grundsätzlich kann ein solcher Roboter oder Roboterarm 400 auch auf dem Boden fahren, aber die von der Führungsschiene 401, die zu einem Schienensystem gehört, herabhängende Ausführungsform hat den Vorteil, dass die ohnehin schon komplexe Steuerung der maschinell beweglichen Eventmobiliarbestandteile 100 nicht noch weiter durch zusätzliche sich auf dem Boden bewegende Eventmobiliarbestandteile, die nicht notwendig dort vorhanden sein müssen, vereinfacht wird.

Der Roboter oder Roboterarm kommt als eine Reaktion auf einen Befehl der ersten Steuerung 901 angefahren und beginnt die Interaktion mit den Gästen 1. Dabei kann insbesondere ein Sprachinterface, wie man es von Computerassistenzsystemen wie Siri oder Alexa kennt zum Einsatz kommen, um die Ergebnisse der Interaktion auszuwerten und gegebenenfalls -etwa bei einem Bestellvorgang- in Handlungen umzusetzen.

Diese kann beispielsweise als eine Art Zugangskontrolle für das Betreten der Raumstation ablaufen, die von dem Roboter oder Roboterarm 400 durchgeführt wird, bei der der Roboter oder Roboterarm 400 bestimmte Präferenzen abfragt und die Steuerung 901 die Konfiguration der maschinell beweglichen Eventbestandteile 100 auf der Basis dieser Abfrage bestimmt oder berechnet, so dass z.B. einander zunächst unbekannte Personen mit ähnlichen Interessen oder beruflichen Hintergründen an einer gegebenen Tischkonfiguration zusammengeführt werden. Es ist aber auch möglich, an erst dieser Stelle den Bestellvorgang durch die Interaktion mit dem Roboter oder Roboterarm durchzuführen.

An dieser Stelle soll erwähnt werden, dass, auch wenn dies nicht ständig explizit erwähnt wird, eine sensorische Untermalung des Erlebnisses und/oder Einbettung des Eventbesuchs in eine Geschichte oder ein Thema durch die jeweiligen Vorrichtungen zur sensorischen Stimulation 12 fortgeführt werden kann, etwa durch Projektion von Bildern, Soundeffekte, Erschütterungen und andere haptische Erlebnisse oder Erzeugung von Gerüchen.

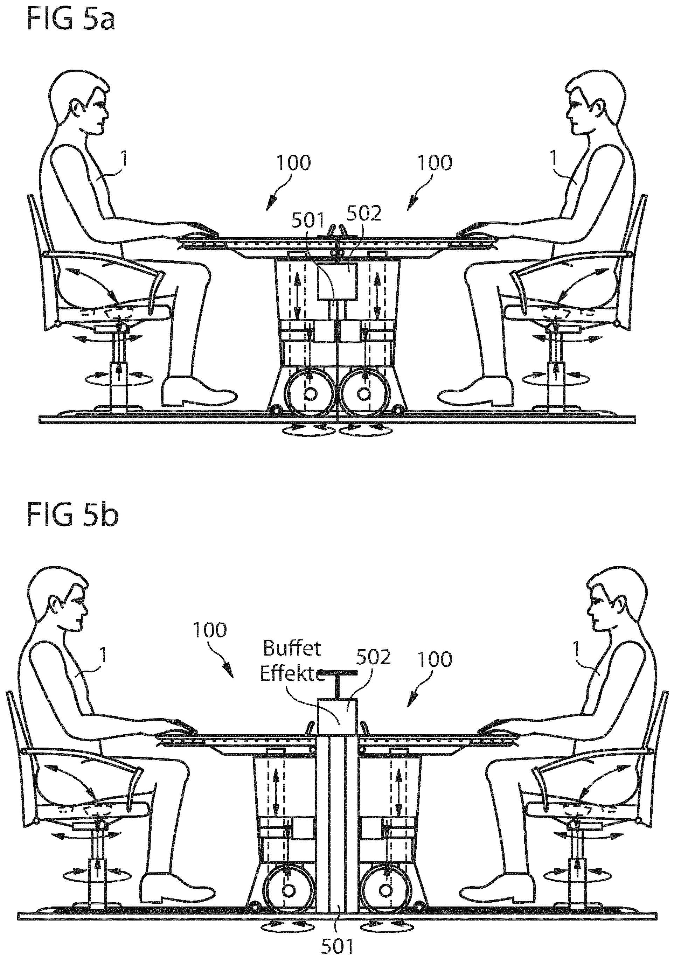

Nach der Herbeiführung einer gegebenen Tischkonfiguration kann dann im Vorspeisenbereich 3 die Vorspeise bereitgestellt werden. Grundsätzlich kann dies durch Eventpersonal oder auch durch Roboterarme erfolgen, eine andere sehr verblüffende Variante besteht aber darin, die Speise von oben oder von unten, gewissermaßen aus dem Tisch heraus auf dem Tisch erscheinen zu lassen, wie es nun am Beispiel der Figuren 5a und 5b detailliert erläutert wird.

In Figur 5a sind zwei Exemplare von maschinell beweglichen Eventmobiliarbestandteilen 100, wie sie oben im Kontext der Figur 2 beschrieben wurden, in miteinander verbundenem Zustand und mit darauf angeordnetem Gast 1 dargestellt. Ferner erkennt man im Innenraum, der von den Gehäusen 127 gebildet wird, bereits ein Mittel zur automatisierten Bereitstellung von Speisen 501, realisiert als ein aus einer Öffnung im Boden herausfahrbarer Stempel, auf dem ein Buffet-Container 502 angeordnet ist, der jeweils die gewählte Vorspeise der Gäste 1 enthält.

Um die Vorspeise tatsächlich auf den Tisch 120 zu bringen, gleiten die maschinell beweglichen Eventmobiliarbestandteile 100 unmerklich ein Stück weit auseinander, wie dies in Figur 5b dargestellt ist, so dass der herausfahrbare Stempel mit darauf angeordnetem Buffetcontainer 502 auf das Niveau der Tischplatten 121 herausgefahren werden kann und die Speisen im Buffetcontainer 502 für die Gäste 1 zugänglich werden.

Es ist aber auch möglich, den Buffetcontainer von Anfang an in dem Eventmobiliarbestandteil anzuordnen und ihn dann mit einem Hubmechanismus, den das Eventmobiliarbestandteil aufweist, auf der Tischplatte auftauchen zu lassen.

Besonders effektiv ist dieses Vorgehen, wenn die Bereitstellung der Speisen erfolgt, während die Vorrichtung zur sensorischen Stimulation 12 die Aufmerksamkeit ablenkt.

Beispielsweise könnte auf eine Wand des Vorspeisenbereichs ein Blick an einem Teil der Raumstation entlang ins Weltall projiziert werden. Plötzlich beginnt sich in diesem Bild ein Punkt zu bewegen, worauf die Gäste 1 durch eine akustische Mitteilung "Intruder alert! Intruder alert!" hingewiesen werden. Zusätzlich dreht die erste Steuerung 901 die Stühle 110 automatisch so, dass die Gäste bei geradeaus gerichtetem Blick den sich bewegenden Punkt erkennen. Der Punkt wird größer und grö-ßer und entpuppt sich als fremdes Raumschiff. Laserkanonen eröffnen das Feuer auf das Raumschiff, das zurückschießt und weiter auf die Raumstation zuhält. Es wird getroffen und verliert die Kontrolle. Eine akustische Warnung "Impact! Impact" ertönt, und das Raumschiff kollidiert mit dem projizierten Teil der Raumstation, während gleichzeitig eine Erschütterung durch die Vibrationsmodule der Stühle simuliert wird und dieser Moment für das Auseinanderfahren der maschinell bewegbaren Eventmobiliarbestandteile 100 und Bereitstellen der Vorspeise genutzt wird. Die Stühle 110 werden nach einer großen, visuell, akustisch und durch Erschütterung untermalten Explosion wieder auf Anweisung der ersten Steuerung 1901 an die Stuhl-steuerung 1902 in ihre Grundposition zurückgefahren, und die Gäste finden überrascht ihre Vorspeise auf dem Tisch vor.

Anzumerken ist, dass nicht zuletzt wegen der Tatsache, dass der gesamte Besuch im animierten Event sich länger hinziehen kann, auch der Notwendigkeit eines Toilettenbesuchs Rechnung getragen werden muss, wozu der Sanitärbereich 7 bereitgestellt ist. Wegen der maschinellen Bewegungen von Eventmobiliarbestandteilen, die erfolgen, ist es bevorzugt, wenn auch beim Aufsuchen des Sanitärbereichs 7 die Bewegung dorthin erfolgt, während der Gast 1 auf einem Eventmobiliarbestandteil angeordnet ist. Der Gast 1 kann den Toilettenbesuch z.B. einleiten, indem er ein entsprechendes Bedürfnis auf einem Bedientablet anmeldet. Die Steuerung errechnet dann einen geeigneten Zeitpunkt und Weg und steuert die maschinelle Bewegung des entsprechenden Eventmobiliarbestandteils, wobei sie auch den aktuellen Besetzungsstand des Sanitärbereichs 7 berücksichtigen kann, so dass Wartezeiten in der Schlange vor den Toiletten minimiert werden können. Das Aufsuchen des Sanitärbereichs 7 sollte aber bevorzugt während der Verzehrphasen in den Bereichen 3,4,5 oder 6 erfolgen und nicht in den Übergangsphasen zwischen dem Aufenthalt in diesen Bereichen.

Nach dem Verzehr der Vorspeise setzen sich die Tische 11 oder die Eventmobiliarbestandteile, aus denen sie zusammengesetzt sind, wieder selbständig, d.h. von der Steuerung 13 kontrolliert und choreographiert, so dass eine Synchronisation mit dem Output der Vorrichtung zur sensorischen Stimulation 12 erfolgt -beispielsweise in einer auf die Art einer musikalischen Untermalung abgestimmten Fortbewegungsform, z.B. in Drehbewegungen bei Walzerklängen-, in Bewegung zum nächsten Bereich, dem ersten Bereich für Hauptgänge 4.

Grundsätzlich kann dies erfolgen, nachdem das benutzte Geschirr und Besteck entfernt wurde -durch Personal, Roboter oder Aufzugsmittel. Eine andere unterhaltsame Möglichkeit besteht darin, dass die Eventmobiliarbestandteile zunächst in einen Sektor des Küchenbereichs 8, um so das benutzte Geschirr und Besteck gewissermaßen selbst zurückzubringen. Während der Gast sich mit dem Eventmobiliarteil in diesen Bereich bewegt, kann z.B. durch die Vorrichtung 12 zur sensorischen Stimulation in diesem Bereich ein Film projiziert werden, der die wahrgenommene Realität erweitert. Beispielsweise könnten die benutzten Teller von einem realen Greifarm auf ein reales Laufband gestellt werden, das in einer Projektionswand verschwindet, das aber in der Projektion in eine von Aliens betriebene Küche fortgesetzt ist, wo z.B. ein Fressmonster Teller vom Band nimmt, Reste in sein Maul schüttet und den Teller dann an einen anderen Alientyp übergibt, der ihn mit einer überdimensionalen Zunge ableckt und dann auf ein Laufband mit "sauberen" Tellern stellt.

Das Eventmobiliarbestandteil 100 fährt dann an einem solchen Laufband mit sauberen Tellern, das aus der Projektionswand herauskommt, vorbei, und der Gast 1 wird akustisch und/oder visuell aufgefordert einen solchen Teller -der beispielsweise auch noch eine leicht feuchte oder leicht schleimige Oberfläche, eine ungewöhnliche Temperatur und/oder einen merkwürdigen Geruch haben könnte, um Anknüpfungspunkte zur "Reinigung" der Teller durch die Aliens im Film zu schaffen- vom Laufband zu nehmen, wenn der erste Bereich für Hauptgänge 4 als Buffetbereich betrieben wird. Besonders stark wirkt diese Illusion, wenn die Gäste individuell unterscheidbare Teller erhalten und der vom Laufband genommene Teller genauso aussieht wie der, den man abgegeben hat.

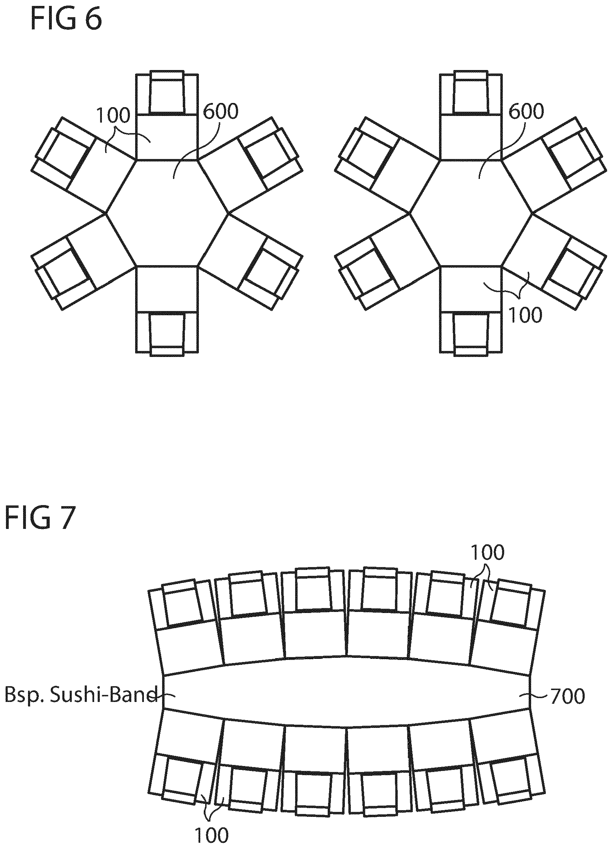

Anschließend fährt das Eventmobiliarbestandteil zu einem Buffetelement und dockt an diesem an. Mögliche Beispielkonfigurationen der Eventmobiliarbestandteile für einen in einem Buffetbetrieb betriebenen ersten Bereich für Hauptgänge 4 zeigen die Figuren 6 und 7.

In der in Figur 6 dargestellten Konfiguration sind zwei Eventmobiliarbestandteile in Form von sechseckigen Buffet-tischen 600 zu sehen, an deren Seiten jeweils ein maschinell bewegliches Eventmobiliarbestandteil 100 angedockt ist. Dabei weisen hier, aber nicht zwingend, die als Buffettische ausgeführten Eventmobiliarbestandteile 600 ihrerseits selbst jeweils Bewegungsmittel zur Durchführung einer maschinell gesteuerten Bewegung auf, was es ermöglicht, während die Gäste 1 in einem anderen Bereich sind, die als Buffettische ausgeführten Eventbestandteile 600 maschinell gesteuert in einen Abschnitt des Küchenbereichs 8 zu fahren und dort für die nächsten Gäste wiederaufzufüllen.

In der in Figur 7 dargestellten Konfiguration ist ein als Sushi-Band ausgeführtes Eventmobiliarbestandteil 700 zu sehen, an dessen Seiten jeweils sechs maschinell bewegliche Eventmobiliarbestandteile 100 angedockt ist. Dabei weist in diesem Beispiel, aber nicht zwingend, das als Sushi-Band ausgeführte Eventmobiliarbestandteil 700 seinerseits selbst Bewegungsmittel zur Durchführung einer maschinell gesteuerten Bewegung auf, was es ermöglicht, während die Gäste in einem anderen Bereich sind die Buffettische maschinell gesteuert in einen Abschnitt des Küchenbereichs 8 zu fahren und dort für die nächsten Gäste wiederaufzufüllen.

Der Vollständigkeit halber sei noch darauf hingewiesen, dass natürlich auch eine Bewegung eines Eventmobiliarbestandteils 600, 700 gemeinsam mit den daran angedockten Eventmobiliarbestandteilen 100 möglich ist.

Auch dieser Prozess kann durch Aktionselemente aufgewertet werden, beispielsweise wenn eingebettet in Output der Vorrichtung zur sensorischen Stimulation 12 die Buffetelemente selbst Mittel zur Durchführung einer maschinellen Bewegung aufweisen, sich im Raum bewegen und von den Eventmobiliarbestandteilen 100 mit Stuhl 110 und Tischelement 120 "eingefangen" werden müssen, die dann nach und nach andocken. Alternativ können sich auch erst Tafeln aus den Eventmobiliarbestandteilen bilden, die dann auseinanderfahren, wenn Buffettische bzw. Sushi-Bänder angefahren kommen und diese in ihre Mitte nehmen.

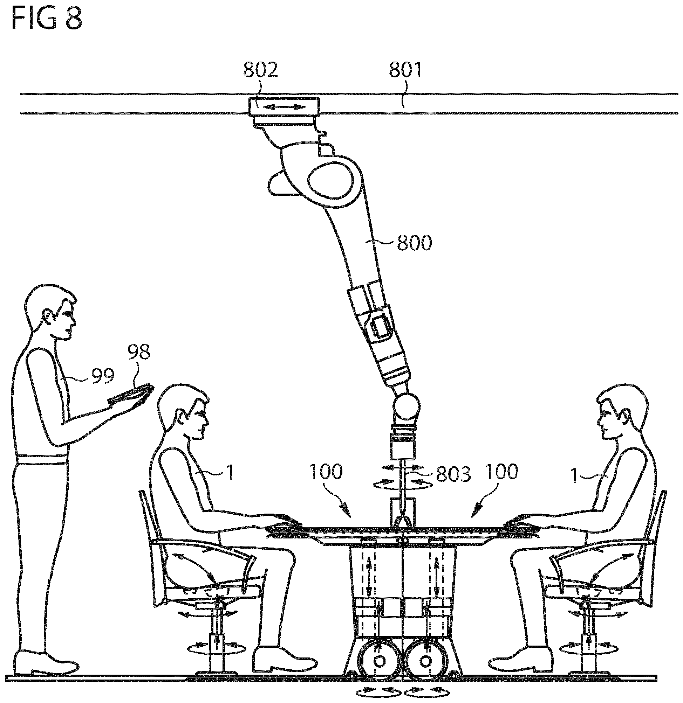

Nachdem die erste Hauptspeise am Buffet im ersten Bereich für Hauptgänge 4 verzehrt wurde, geht es weiter in den zweiten Bereich für Hauptgänge 5. Die maschinelle Bewegung der Eventmobiliarbestandteile dorthin kann beispielsweise, wie nun anhand der Figur 8 näher erläutert wird, von einem Eventmobiliarbestandteil in Form eines Roboters oder Roboterarms 800, der vorzugsweise an einem an der Decke montierten Schienensystem geführt wird, synchron begleitet oder kontrolliert werden.

In Figur 8 sind zwei Exemplare von maschinell beweglichen Eventmobiliarbestandteilen 100, wie sie oben im Kontext der Figur 2 beschrieben wurden, in miteinander verbundenem Zustand und mit darauf angeordnetem Gast 1 dargestellt. Ferner erkennt man ein weiteres Eventmobiliarbestandteil in Form eines von einer Führungsschiene 801 herabhängenden Roboters oder Roboterarms 800 mit Hilfe seiner automatisierten Antriebseinheit als Bewegungsmittel 802 zur Ausführung einer maschinellen Bewegung. Der Roboter oder Roboterarm 800 kommt als eine Reaktion auf einen Befehl der ersten Steuerung 1901 an die Roboter-Steuerung 1907 angefahren und bringt eine Sonde 803 in die Nähe der Tische 120 der verbundenen maschinell beweglichen Eventmobiliarbestandteile 100.

Die erste Steuerung 1901 steuert dann den Roboter oder Roboterarm 800 über die Roboter-Steuerung und die maschinell beweglichen Eventmobiliarbestandteile 100 über die Navigations-Steuerung 1910 simultan und synchron derart, dass für die Gäste der Eindruck entsteht, ihre Bewegung sei durch den Roboter oder Roboterarm 800 veranlasst, was sie sich aber natürlich nicht erklären können, da ja gar keine Wechselwirkung oder Kopplung erkennbar ist (und tatsächlich auch gar nicht besteht) .

Ebenfalls gezeigt ist ein Eventmitarbeiter 99 mit einem Bediengerät 98, das die Einflussnahme auf die erste Steuerung 1901 über die Operator-Steuerung 1912 erlaubt, um bei für den Menschen erkennbaren oder vorhersagbaren Gefahrensituationen unverzüglich eingreifen zu können.

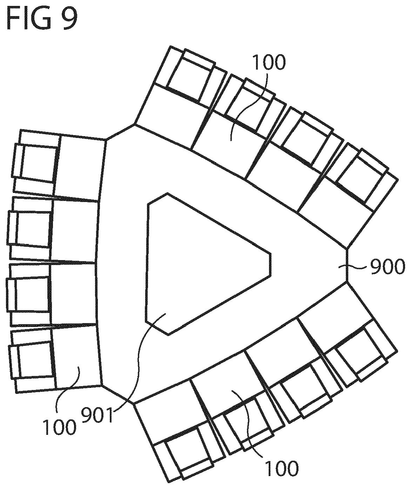

Die durch den Roboter oder Roboterarm 800 scheinbar veranlasste Bewegung kann insbesondere auch wieder über den Küchenbereich 8 führen, wo beispielsweise in Abhängigkeit von der Bestellung an eine von mehreren Show-Cooking-Stationen angedockt wird, wie es in Figur 9 exemplarisch gezeigt ist.

Figur 9 zeigt ein Eventmobiliarbestandteil 900 in Form einer Show-Cooking-Station 900, in deren Mitte 901 der Koch angeordnet ist und an dessen Seiten jeweils vier maschinell bewegliche Eventmobiliarbestandteile 100 angedockt sind. Die darauf angeordneten Gäste 1 können die Zubereitung ihrer Gerichte oder zumindest deren Endphase dann unmittelbar mitverfolgen, bekommen die Teller ganz frisch auf die Tische 120. Nach dem Erhalt der zubereiteten Mahlzeit fahren die Eventmobiliarbestandteil 100 maschinell gesteuert weiter in den zweiten Bereich für Hauptgänge 5, wo sie sich dann wieder mit anderen Eventmobiliarbestandteilen zu einem Tisch 11 für eine bestimmte Zahl von Personen konfigurieren.

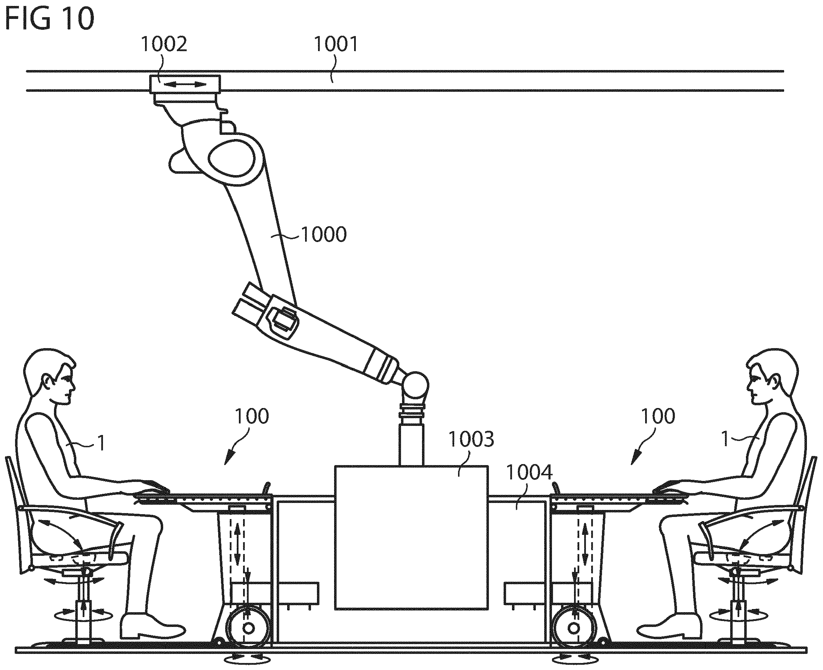

Nach dem Verzehr dieses Ganges bewegen sich die Eventmobiliarbestandteile dann zum Dessertbereich 6, wo sie sich wieder zu einem großen Tisch 11 für 12 Personen zusammensetzen. Das Dessert kann, von einem maschinell beweglichen Eventmobiliarbestandteil in Form eines Roboters oder Roboterarms 1000, wie in Figur 10 dargestellt, der an einer Führungsschiene 1001 die zu einem Schienensystem gehört mit einem Bewegungsmittel 1002 in Form einer automatisierten Antriebseinheit verfahrbar aufgehängt ist, als Buffet 1003 in ein maschinell bewegliches Eventmobiliarbestandteil 1004 in Form eines Buffetmoduls oder auch individuell serviert werden. Während oder nach Abschluss des Verzehrs des Desserts kann von der Vorrichtung 12 zur sensorischen Stimulation der Rücksturz zur Erde an die Wände des Dessertbereichs 6 projiziert werden. Danach ist die Weltraumreise vorbei, und die Gäste werden wieder in den Lobbybereich 9 entlassen, wo sie aber natürlich ihr Abenteuer und die vielen einmaligen Eindrücke, die sie erlebt haben, noch bei einem Drink verarbeiten dürfen.

Ein alternatives Konzept für ein animiertes Event mit einem Eventsystem 50 ist in den Figuren 12a und 12b dargestellt. Mit diesem Konzept lassen sich insbesondere virtuell Besuche an Aussichtspunkten einfach simulieren, so dass zusätzlich zum geschmacklichen Erlebnis des Eventbesuchs einmalige Eindrücke vermittelt werden können.

Wie bei dem Eventsystem 10 zeichnet sich auch das Eventsystem 50 erstens durch ebenfalls beispielsweise wie oben im Zusammenhang mit den Figuren 2, 13 und 14 beschrieben realisierten, maschinell beweglichen Eventmobiliarbestandteilen 100,200,250,300 und/oder 350 aus.

Zweitens sind auch hier Vorrichtungen 52 zur sensorischen Stimulation von Gästen des animierten Events vorhanden. Insbesondere ist dies hier als eine visuelle Stimulation durch Projektionsapparate und Unterlegung dieser visuellen Effekte durch Soundeffekte realisiert, auch hier können aber olfaktorische Effekte durch Freisetzung von Aromastoffen oder haptische Effekte, z.B. Vibrationen, Sprühnebel, Luftströmungen oder Ähnliches realisiert werden.

Drittens wird auch in diesem Fall die Bewegung der Eventmobiliarbestandteile 100,200,250,300 und/oder 350 die und sensorische Stimulation der daran angeordneten Gäste 1 durch eine Steuerung 53, die wie in Figur 1 nur schematisch gezeigt ist, aber wie die oben anhand der Figur 11 näher erläuterte Steuerung 13 aufgebaut sein kann, miteinander synchronisiert.

Wie die Zusammenschau der Figuren 12a und 12b verdeutlicht, ist ein Kernelement des Eventsystems 50 dieses animierten Events ein Dom 51, der als Projektionsfläche dient und innerhalb dessen der gesamte Eventbetrieb abläuft. Auf die Innenseite des Doms 51 können insbesondere mittels einer an der Decke des Doms 51 befestigten Trägersystem 54 montierten Vorrichtung 52 zur sensorischen Stimulation, die bewegliche Projektoren umfasst, 3D-kinoartige Filme und/oder Bildsequenzen projiziert werden. Insbesondere ist es vorteilhaft, wenn die Bewegungsfreiheitsgrade heben, senken, drehen, kippen und Änderung des Abstands zum Befestigungspunkt des Trägersystems in radialer Richtung realisiert sind, und zwar besonders bevorzugt mit einem Antrieb, der ebenfalls von der Steuerung 53 angesteuert wird.

In der Mitte des Doms 51 ist eine zentrale Struktur 55 angeordnet, die von einer umlaufenden, durch ein Geländer 56 gesicherten Aussichtsplattform 57 umgeben ist, welche durch Türen von der zentralen Struktur 55 aus zugänglich ist, welche groß genug sind, um Restaurantmobiliarbestandteile 100,200,250, 300,350 einzeln und/oder in Gruppen als Folge einer maschinellen Bewegung passieren zu lassen. Auf dieser Aussichtsplattform 57 werden die Speisen und Getränke verzehrt, wobei die Eventmobiliarbestandteile 100,200,250,300,350 durch die Steuerung 53 synchronisiert mit der sensorischen Stimulation insbesondere durch den Output der an der Decke des Doms 51 befestigten Trägersystem 54 montierten Vorrichtung 52 zur sensorischen Stimulation, die bewegliche Projektoren umfasst, bewegt werden. Zur Bereitstellung der Speisen und Getränke können Bar-Tresen 58 auf der Aussichtsplattform 57 vorhanden sein.

Als Output der Vorrichtung 52 zur sensorischen Stimulation bieten sich, angepasst an die Aussichtsplattform 57, beispielsweise Panoramen an, so dass man beispielsweise wie in einem Aussichtsrestaurant auf dem Eiffelturm den Blick auf Paris genießen kann oder einen Blick vom Gipfel des Mount Everest.

Im Inneren der zentralen Struktur 55 ist ein Infrastrukturbereich 59 vorgesehen, der insbesondere Treppen, Sanitäreinrichtungen, einen Technikraum, in dem insbesondere die Steuerung 53 aufgenommen ist, Vorratsräume und/oder die Küche untergebracht sein können. Darüber hinaus weist die zentrale Struktur 55 in ihrem Inneren noch einen Raum 60 mit einer weiteren Vorrichtung 52 zur sensorischen Stimulation auf.

Mit diesem zusätzlichen Raum 60 mit weiterer Vorrichtung 52 zur sensorischen Stimulation kann ein zusätzliches Aktionselement realisiert werden, das den Besuch des mit einem Eventsystem 50 betriebenen animierten Events zu einem einzigartigen Ergebnis werden lässt und insbesondere gut zu dem Thema des Aussichtpunktes passt, nämlich eine Simulation des Aufstiegs zu diesem Aussichtspunkt - beispielsweise einer Aufzugsfahrt zur Spitze des Hochhauses, eine futuristische Aufzugsfahrt zum Mond oder auch der Flug auf dem Rücken oder in den Klauen eines Riesenvogels oder eines Drachens auf den Gipfel eines Berges.

Wie beim Betrieb des animierten Events mit dem Eventsystem 10 nehmen die Gäste dazu zunächst an einer im Raum 60 bereitgestellten, aus mehreren Eventmobiliarbestandteilen 100,200,250,300,350 zusammengesetzten Tafel Platz oder werden auf den Eventmobiliarbestandteilen 100,200, 250,300,350 maschinell in den Raum 60 hineinbewegt und zur Tafel gruppiert.

Durch eine Projektion der weiteren Vorrichtung 52 zur sensorischen Stimulation auf die Innenwände des Raums 60 kann dann der Aufstieg zum Aussichtspunkt simuliert werden, beispielsweise im Fall eines Städte-Panoramas auf der Aussichtsplattform 57 eine Fahrt in einem Glasaufzug an einer Hochhausfassade nach oben. Auf einen Teil 61 der Innenwände des Raums kann dann beispielsweise einen Blick in einzelne Etagen des Hochhauses und das Geschehen darin projiziert werden, während auf einen anderen Teil 62 der Innenwände ausgehend vom Stra-ßengeschehen, das im Laufe des Aufstiegs immer kleiner wird, immer mehr von der Skyline der Stadt sichtbar wird.

Während es grundsätzlich möglich ist, diese Eindrücke nur über die visuelle Stimulation zu erzeugen, also tatsächlich gar kein Etagenwechsel erfolgen muss, können die Eindrücke beträchtlich intensiviert werden, wenn sie durch weitere sensorische Wahrnehmungen ergänzt werden.

Beispielsweise kann ein Bodenabschnitt 63 des Raums 60 auf einer Bewegungseinrichtung 64, hier beispielsweise eine Hydraulikvorrichtung, angeordnet sein, die einerseits tatsächlich eine Hubbewegung ausführen und dadurch Beschleunigungseffekte, wie sie bei einem Fahrstuhl auftreten, realisieren kann. Bei einer komplexer ausgeführten Bewegungseinrichtung 64, wie sie beispielsweise bei Flugsimulatoren für das Pilotentraining zum Einsatz kommt, können aber auch Schwenk-, Roll- und Kippbewegungen realisiert werden. Dies kann dann ausgenutzt werden, um weitere Aktions- oder Erzählmomente in den Aufstieg zu integrieren. Beispielsweise kann King Kong an dem Hochhaus, an dessen Außenfassade der Aufzug fährt, auftauchen und dem Aufzug einen Stoß versetzen, so dass er ins Schwanken gerät. Insbesondere dann, wenn die auf der Aussichtsplattform durch sensorische Stimulation simulierte Aussicht die von einem Berggipfel ist, kann man auch die Flugbewegungen eines Riesenvogels oder Drachens, der die Gäste in der sensorischen Stimulation auf den Berg trägt, simulieren, was den Gesamteindruck weiter intensiviert.

Zusätzlich können natürlich auch noch eine Reihe anderer sensorischer Stimulationen vorgenommen werden. Beispielsweise können Gerüche an Ereignisse in Etagen des Hochhauses, an denen ein Aufzug vorbeifährt angepasst werden. Beispielsweise kann beim Passieren einer Bäckerei der Duft nach Kuchen oder beim Passieren einer Wäscherei der Duft nach Waschmittel und frischer Wäsche oder beim Passieren einer Parfümerie Parfümdüfte erzeugt werden, oder beim Durchstoßen einer Wolkendecke Feuchtigkeit freigesetzt werden.

Am Ende des so sensorisch untermalten Aufstiegs öffnen sich dann Türen zur Aussichtsplattform 57 und die einzelnen Eventmobiliarbestandteile 100, 200, 250, 300, 350 bewegen sich synchronisiert zu diesem Teil des Outputs der Vorrichtung 52 zur sensorischen Stimulation auf die Aussichtsplattform.

Dort können dann insbesondere mit Blick auf die von der Vorrichtung 52 zur sensorischen Stimulation in den Dom 51 projizierten Bilder Speisen und Getränke genossen werden, ehe zum Abschluss des Aufenthalts im Raum 60 die Fahrt in umgekehrter Richtung zurück zum Boden simuliert wird.

Anstelle eines einzelnen Bodenabschnittes 63, wie in Figur 12a gezeigt, kann dann auch der gesamte Boden des Raums 60 durch die Bewegungseinrichtung 64 bewegt werden, einerseits kann tatsächlich eine Hubbewegung ausgeführt werden, um Beschleunigungseffekte aber auch Vibrationen zu realisieren. So kann der Besuch des mit einem Eventsystem 50 betriebenen animierten Events zu einem einzigartigen Ergebnis werden, wobei ergänzend zu den zuvor beschriebenen Szenarien, beispielsweise einer Aufzugsfahrt o.Ä., außergewöhnliche Zusatzeffekte wie Erdbeben, Funktionsstörungen erzeugt werden können. Auch können bei einem Flug auf dem Rücken oder in den Klauen eines Riesenvogels, eines Drachens, eines Teppichs oder eines Fluggerätes Luftlöcher oder Funktionsstörungen eindrucksvoll simuliert werden. Ein Gemeinschaftserlebnis kann insbesondere dadurch bestärkt werden, dass alle sich in dem Raum befindenden Gäste auf einem einzigen Bodenabschnitt gemeinsam angeordnet sind und dieses Erlebnis zeitgleich, wie in Figur 12c dargestellt, erleben können.

Eine schematische Detaildarstellung gemäß Figur 12d zeigt die Bewegungseinrichtung 64 gemäß Figur 12c, wobei die Bewegungseinrichtung 64 eine Kulisse 65 aufweist, die in der mit einem Doppelpfeil gekennzeichneten Richtung verschoben werden kann. Die Kulisse 65 steht in Wirkkontakt mit einer Abstützung 66 des Bodenabschnitts 63 und kann durch einen Aktor bevorzugt in der Horizontalen verschoben werden. Die Kulisse 65 kann eine beliebige Kontur aufweisen, die an die Verwendung angepasst ist. Im Beispiel gemäß Figur 12d sind mehrere lokale Minima A vorgehen, in der die Kulisse 64 den Bodenabschnitt kraftlos in einer Position halten kann. Weiterhin weist die Kulisse einen Rampenabschnitt B und einen Wellenabschnitt C auf. Der Rampenabschnitt B soll einer Hubbewegung der Abstützung 66 bzw. des Bodenabschnitts 63 dienen und der Wellenabschnitt C der Erzeugung von Vibrationen.

Der Bodenabschnitt 63 kann seitlich beweglich gelagert sein, wobei in Figur 12b eine Lagerung 68 symbolisch durch eine Rolle ausgebildet ist. Der Bodenabschnitts 63 kann bevorzugt von drei Bewegungseinrichtungen 64 bewegt werden, die jeweils eine Kulisse 65 und einen Linearantrieb umfassen. Die Bewegungseinrichtungen können synchron oder asynchron betrieben werden, wodurch eine derart ausgebildete Bewegungseinrichtung 64 eine Bewegung des Bodenabschnitts 63 in drei Freiheitgraden ermöglicht, nämlich eine Hubbewegung sowie Bewegungen in zwei Raumwinkeln.

### Bezugszeichenliste

- 1: Gast
- 2: Erlebnisbereich
- 3: Vorspeisenbereich
- 4,5: Bereich für Hauptgänge
- 6: Dessertbereich
- 7: Sanitärbereich
- 8: Küchenbereich
- 9: Barbereich
- 10: Eventsystem
- 11: Tisch
- 12: Vorrichtung zur sensorischen Stimulation
- 13: Steuerung
- 15: Wand-, Trenn- oder Sichtschutzelement
- 16: Docking-Station
- 50: Eventsystem
- 51: Dom
- 52: Vorrichtung zur sensorischen Stimulation
- 53: Steuerung
- 54: Trägersystem
- 55: zentrale Struktur
- 56: Geländer
- 57: Aussichtsplattform
- 58: Bar-Tresen
- 59: Infrasturkturbereich
- 60: Raum
- 61: Teil der Innenwände
- 62: Teil der Innenwände
- 63: Bodenabschnitt
- 64: Bewegungseinrichtung
- 65: Kulisse
- 66: Abstützung
- 68: Lagerung
- 98: Bediengerät
- 99: Eventmitarbeiter
- 100: Eventmobiliarbestandteil
- 110: Stuhl
- 111: Traggestell
- 112: Sitzfläche
- 120: Tisch
- 121: Tischplatte
- 122: Schnellkupplung
- 123: Gestell
- 127: Gehäuse
- 130: Bodenplatte
- 131: Tragmittel
- 132: Reibrad
- 133: Höhenverstellmechanismus
- 134: Betriebsmittelspeicher
- 135: Steuerungsmittel
- 136: Kommunikationsmodul
- 200: Eventmobiliarbestandteil
- 201: Kopplungsvorrichtung
- 250: Eventmobiliarbestandteil
- 300: Eventmobiliarbestandteil
- 350: Eventmobiliarbestandteil
- 400: Roboter oder Roboterarm
- 401: Führungsschiene
- 402: Bewegungsmittel
- 501: Mittel zur automatisierten Bereitstellung von Speisen
- 502: Buffet-Container
- 600: Eventmobiliarbestandteil
- 700: Eventmobiliarbestandteil
- 800: Roboter oder Roboterarm
- 801: Führungsschiene
- 802: Bewegungsmittel
- 803: Sonde
- 900: Eventmobiliarbestandteil
- 901: Mitte
- 1000: Roboter oder Roboterarm
- 1001: Führungsschiene
- 1002: Bewegungsmittel
- 1003: Buffetmodul
- 1111: Schnellkupplung
- 1112: Verschiebemechanismus
- 1113: Hubmechanismus
- 1114: Rotationsmechanismus
- 1115: Kippmechanismus
- 1121: Armlehne
- 1122: Rückenlehne
- 1123: Einrichtung zur sensorischen Stimulation
- 1124: Sensor
- 1125: Bedienelement
- 1211: Sender und/oder Empfänger
- 1212: Abstandssensor
- 1213: Sicherheitssensor
- 1214: Mittel zur Erzeugung von Spezialeffekten
- 1215,1216: Display
- 1217: Bedienelement

- 1901: erste Steuerung
- 1902: Stuhl-Steuerung
- 1903: Tisch-Steuerung
- 1904: Lichtsteuerung
- 1905: Gebläse-Steuerung
- 1906: Buffet-Steuerung
- 1907: Roboter-Steuerung
- 1908: Sound-Steuerung
- 1909: Projektions-Steuerung
- 1910: Navigations-Steuerung
- 1911: Kalibrier-Steuerung
- 1912: Operator-Steuerung
- 1913: Dockingstations-Steuerung

## Patentansprüche

1. Eventsystem (10,50) für ein animiertes Event, wobei das Eventsystem (10,50) aufweist
- mindestens ein im Raum bewegbares Eventmobiliarbestandteil (100,200,250,300,350), das mindestens einen Tisch und/oder mindestens einen Stuhl umfasst,
- mindestens eine Vorrichtung zur sensorischen Stimulation (12,52) von Gästen (1) des animierten Events,
wobei
das im Raum bewegliche Eventmobiliarbestandteil (100,200,250,300,350) Bewegungsmittel für eine maschinelle Bewegung aufweist, und
wobei
das Eventsystem (10,50) ferner eine erste Steuerung (1901) umfasst, die eingerichtet ist, um die maschinelle Bewegung und die Ausgabe der Vorrichtung (12,52) zur sensorischen Stimulation von Gästen (1) des animierten Events miteinander synchronisiert zu steuern,
**dadurch gekennzeichnet, dass**
das Eventsystem (10,50) ferner mindestens ein bewegliches Wand-, Trenn- oder Sichtschutzelement (15) als weiteres Eventmobiliarbestandteil aufweist, und dass
das bewegliche Wand-, Trenn- oder Sichtschutzelement (15) maschinell beweglich ist und dass diese maschinelle Bewegung entweder ebenfalls von der ersten Steuerung (1901) und/oder von einer weiteren Steuerung (13) gesteuert wird.

2. Eventsystem (10,50) nach Anspruch 1, aufweisend
- mindestens einen im Raum bewegbaren Bodenabschnitt (63), wobei der mindestens eine Bodenabschnitt (63) durch mindestens eine Bewegungseinrichtung (64) maschinell beweglich ist, und wobei die erste Steuerung (1901) eingerichtet ist, um die maschinelle Bewegung des mindestens einen Bodenabschnitts (63) und eine Ausgabe einer Vorrichtung (12, 52) zur sensorischen Stimulation von Gästen (1) des animierten Events miteinander synchronisiert zu steuern.

3. Eventsystem (10,50) nach Anspruch 2,
**dadurch gekennzeichnet, dass**
die Bewegungseinrichtung (64) den mindestens einen Bodenabschnitt (63) in mindestens drei Freiheitsgraden bewegen kann, vorzugweise in sechs Freiheitgraden.

4. Eventsystem (10,50) nach Anspruch 2 oder 3,
**dadurch gekennzeichnet, dass**
die Bewegungseinrichtung (64) mindestens einen Linearantrieb und/oder einen Gewichtsausgleich umfasst.

5. Eventsystem (10,50) nach einem der Ansprüche 2 bis 4,
**dadurch gekennzeichnet, dass**
die Bewegungseinrichtung (64) eine Kulisse umfasst, durch die eine Auslenkung an einem Angriffspunkt des mindestens einen Bodenabschnitts (63) vorgegeben wird.

6. Eventsystem (10,50) nach einem der vorgenannten Ansprüche, **dadurch gekennzeichnet, dass** die Vorrichtung zur sensorischen Stimulation (12,52) zur visuellen, akustischen, olfaktorischen und/oder haptischen Stimulation ausgelegt und/oder eingerichtet ist.

7. Eventsystem (10,50) nach einem der vorgenannten Ansprüche, **dadurch gekennzeichnet, dass** die Umgebung und/oder der Output der Vorrichtung (12,52) zur sensorischen Stimulation variabel und vorzugsweise auf gästespezifischen Content anpassbar ist.

8. Eventsystem (10,50) nach einem der vorgenannten Ansprüche, **dadurch gekennzeichnet, dass** das Eventsystem (10,50) ferner einen Tisch (11, 120) und Mittel (501) zur automatisierten Bereitstellung von Speisen auf dem Tisch (11,120) aufweist, die von der ersten Steuerung (1901) und/oder von einer weiteren Steuerung gesteuert werden.

9. Eventsystem (10,50) nach einem der vorgenannten Ansprüche, **dadurch gekennzeichnet, dass** das Eventsystem (10,50) mindestens einen Roboter oder Roboterarm (400,800,1000) aufweist, der von der ersten Steuerung (1901) und/oder von einer weiteren Steuerung (1907) gesteuert wird.

10. Eventsystem (10,50) nach Anspruch 9,
**dadurch gekennzeichnet, dass** der Roboter oder Roboterarm (400,800,1000) von der Decke abgehängt und/oder an einer an der Decke montierten Führungsschiene (401,801,1001) montiert ist.

11. Eventsystem (10,50) nach Anspruch 9 oder 10,
**dadurch gekennzeichnet, dass** die erste Steuerung (1901) die maschinelle Bewegung des Eventmobiliarbestandteils (100) durch eine Wechselwirkung mit dem von der ersten Steuerung (1901) direkt oder indirekt gesteuerten Roboter oder Roboterarm (800) kontrolliert.

12. Eventsystem (10,50) nach Anspruch 8 und einem der Ansprüche 9 bis 11,
**dadurch gekennzeichnet, dass** die erste Steuerung (1901) und/oder die weitere Steuerung derart programmiert und eingerichtet ist, dass die Mittel zur automatisierten Bereitstellung von Speisen auf dem Tisch (11,120) beim automatisierten Bereitstellen von Speisen mit dem Roboter oder Roboterarm zusammenwirken.

13. Eventsystem (10,50) nach einem der Ansprüche 9 bis 12,
**dadurch gekennzeichnet, dass** die erste Steuerung (1901) und/oder die weitere Steuerung derart programmiert und eingerichtet ist, dass der Roboter oder Roboterarm (400) mit Gästen (1) des animierten Events interagiert.

14. Eventsystem (10,50) nach einem der vorgenannten Ansprüche, **dadurch gekennzeichnet, dass** die maschinelle Bewegung mit einem Luftkissensystem, mit einem Magnetsystem, mit einem Flurfördersystem, mit einem Schienensystem oder mit einer -insbesondere abschnittsweisen-Kombination dieser Systeme erfolgt.

15. Eventsystem (10,50) nach einem der vorgenannten Ansprüche, **dadurch gekennzeichnet, dass** die Steuerung (13) derart programmiert und eingerichtet ist, dass die Vorrichtung (12,52) zur sensorischen Stimulation von Gästen (1) des animierten Events
- visuelle Inhalte bereitstellt, insbesondere visuelle Inhalte entweder auf Tische (120), Stühle (110), Bodenabschnitte (63), Wandabschnitte oder in dem Raum zwischen den Bestandteilen des Eventsystems (10,50) projiziert, oder diese dem Gast (1) in einer personalisierten Betrachtungsvorrichtung bereitstellt, und/oder
- maschinelle Bewegungen und/oder projizierte visuelle Inhalte akustisch untermalt, und/oder
- Geruchsstoffe freisetzt, die vorzugsweise an visuelle Inhalte oder akustische Untermalung angepasst sind, und/oder
- haptische Reize erzeugt, vorzugsweise lokal an Tischen (120) oder Stühlen (110).

16. Eventsystem (10,50) nach einem der vorgenannten Ansprüche, **dadurch gekennzeichnet, dass** das Eventsystem (10,50) einen oder mehrere Sensoren (1124, 1213) zur Erfassung des Verhaltens von Gästen (1) des animierten Events aufweist, die mit mindestens einer der Steuerungen in Signalkommunikation stehen.

17. Eventsystem (10,50) nach einem der vorgenannten Ansprüche, **dadurch gekennzeichnet, dass** das Eventsystem (10,50) eine Navigations-Steuerung (1910) aufweist, mit dem die Position von einzelnen Eventmobiliarbestandteilen (100,200,250,300,350) des Eventsystems (10,50) erfasst und die Bewegung einzelner Eventmobiliarbestandteile (100,200,250,300,350) des Eventsystems (10,50) gesteuert werden kann.

18. Eventsystem (10,50) nach einem der vorgenannten Ansprüche, **dadurch gekennzeichnet, dass** Bediengeräte (98) für Eventmitarbeiter (99) vorhanden sind, die mit der ersten Steuerung (1901) in direkter oder indirekter Signalkommunikation stehen und den Eingriff in Abläufe der ersten Steuerung (1901) ermöglichen.

19. Verfahren zum Betrieb eines Eventsystems (10,50) nach einem der vorstehenden Ansprüche,
**dadurch gekennzeichnet, dass** eine maschinelle Bewegung mindestens eines Eventmobiliarbestandteils (100,200,250,300,350) und/oder des mindestens einen Bodenabschnitts (63) und die Ausgabe der Vorrichtung (12,52) zur sensorischen Stimulation von Gästen (1) des animierten Events durch die erste Steuerung (1901) automatisch miteinander synchronisiert werden.

20. Verfahren nach Anspruch 19,
**dadurch gekennzeichnet, dass** die Vorrichtung (12,52) zur sensorischen Stimulation von Gästen (1) des animierten Events
- visuelle Inhalte bereitstellt, insbesondere visuelle Inhalte entweder auf Tische (11,120), Stühle (110), Bodenabschnitte, Wandabschnitte oder in dem Raum zwischen den Bestandteilen des Eventsystems oder projiziert, oder diese dem Gast (1) in einer personalisierten Betrachtungsvorrichtung bereitstellt, und/oder
- maschinelle Bewegungen und/oder projizierte visuelle Inhalte akustisch untermalt, und/oder
- Geruchsstoffe freisetzt, die vorzugsweise an visuelle Inhalte oder akustische Untermalung angepasst sind, und/oder
- haptische Reize erzeugt, vorzugsweise lokal an Tischen (11,120) oder Stühlen (110).

## Claims

1. Event system (10, 50) for an animated event, wherein the event system (10, 50) comprises
- at least one moveable within a room event furniture component (100, 200, 250, 300, 350), which includes a table and/or at least one chair,
- at least one system (12, 52) for the sensory stimulation of guests (1) of the animated event,
wherein the moveable within a room event furniture component (100, 200, 250, 300, 350) comprises moving means for a mechanized movement, and wherein the event system (10, 50) further comprises a first controller (1901), which is configured to control the mechanized movement and the output of the system for the sensory stimulation of guests (12, 52) of the animated event in a mutually synchronized manner,
**characterized in that** the event system (10, 50) further comprises at least one movable wall, separation or screen element (15) as further event furniture component, and **in that** the wall, separation or screen element (15) is mechanizedly movable and **in that** this mechanized movement is either also controlled by the first controller (1901) and/or by a further controller (13).

2. Event system (10, 50) in accordance with claim 1, comprising
- at least one moveable within a room floor section (63), wherein the moveable within a room floor section (63) is mechanically movable by means of at least one moving apparatus (64), and whereby the first controller (1901) is configured to control the mechanized movement of the at least one floor section (63) and an output of a system (12, 52) for the sensory stimulation of guests (1) of the animated event in a mutually synchronized manner.

3. Event system (10, 50) in accordance with claim 2,
**characterized in that** the moving apparatus (64) is capable of moving the at least one floor section in at least three degrees of freedom, preferably in six degrees of freedom.

4. Event system (10, 50) in accordance with claim 2 or 3,
**characterized in that** the moving apparatus (64) comprises at least one linear drive and/or weight compensation.

5. Event system (10, 50) in accordance with any of claims 2 to 4,
**characterized in that** the moving apparatus (64) comprises a stage, by means of which a deflection at a point of application of the at least one floor section (63) is indicated.

6. Event system (10, 50) in accordance with any of the preceding claims, **characterized in that** the system for sensory stimulation (12, 52) is designed and/or configured for visual, acoustic, olfactory and/or haptic stimulation.

7. Event system (10, 50) in accordance with any of the preceding claims, **characterized in that** the surroundings and/or the output of the system (12, 52) for sensory stimulation is(are) variable and can preferably be adapted to a guest-specific content.

8. Event system (10, 50) in accordance with any of the preceding claims, **characterized in that** the event system (10, 50) further comprises a table (11, 120) and, on the table, means (501) for the automated preparation of food, which are controlled by the first controller (1901) and/or by a further controller.

9. Event system (10, 50) in accordance with any of the preceding claims, **characterized in that** the event system (10, 50) comprises at least one robot or robot arm (400, 800, 1000), which is controlled by the first controller (1901) and/or by a further controller (1907).

10. Event system (10, 50) in accordance with claim 9,
**characterized in that** the robot or robot arm (400, 800, 1000) is suspended from the ceiling and/or is mounted on a guide rail (401, 801, 1001) which is mounted on the ceiling.

11. Event system (10, 50) in accordance with claim 9 or 10,
**characterized in that** the first controller (1901) controls the mechanized movement of the event furniture component (100) by means of an interaction with the robot or robot arm (800) directly or indirectly controlled by the first controller (1901).

12. Event system (10, 50) in accordance with claim 8 and any of claims 9 to 11, **characterized in that** the first controller (1901) and/or the further controller is(are) programmed and configured such the means for the automated preparation of food on the table (11, 120) interact with the robot or the robot arm during the automated preparation of food.

13. Event system (10, 50) in accordance with any of claims 9 to 12,
**characterized in that** the first controller (1901) and/or the further controller is(are) programmed and configured such that the robot or the robot arm (400) interacts with guests (1) of the animated event.

14. Event system (10, 50) in accordance with any of the preceding claims, **characterized in that** the mechanized movement is carried out with an air cushion system, with a magnet system, with a floor conveyor system, with a rail system or with an, in particular section-wise, combination of these systems.

15. Event system (10, 50) in accordance with any of the preceding claims, **characterized in that** the controller (13) is programmed and configured such that the system (12, 52) for the sensory stimulation of guests (1) of the animated event
- provides visual contents, in particular visual contents either on tables (120), chairs (110), floor sections (63), wall sections, or projected into the room between the components of the event system (10, 50), or provides them to the guest (1) in a personalized viewing device, and/or
- acoustically underscores mechanized movements and/or projected visual contents, and/or
- releases aromatic substances, which are preferably adapted to visual contents or to acoustic underscoring, and/or
- generates haptic sensations, preferably locally at tables (120) or chairs (110).

16. Event system (10, 50) in accordance with any of the preceding claims,
**characterized in that** the event system (10, 50) comprises one or more sensors (1124, 1213) for detecting the behavior of guests (1) of the animated event and which is in signal communication with at least one of the controllers.

17. Event system (10, 50) in accordance with any of the preceding claims,
**characterized in that** the event system (10, 50) comprises a navigation controller (1910), by means of which the positions of the individual event furniture components (100, 200, 250, 300, 350) of the event system (10, 50) can be detected and the movement of individual event furniture components (100, 200, 250, 300, 350) of the event system (10, 50) can be controlled.

18. Event system (10, 50) in accordance with any of the preceding claims,
**characterized in that** operating devices (98) are provided for the employees which are in direct or indirect signal communication with the first controller (1901) and which allow for the intervention in the processes of the first controller (1901).

19. Method for operating an event system (10, 50) in accordance with any of the preceding claims,
**characterized in that** a mechanized movement of at least one individual event furniture component (100, 200, 250, 300, 350) and/or of the at least one floor section (63) and the output of the system (12, 52) for the sensory stimulation of guests (1) of the animated event are automatically synchronized with each other by the first controller (1901).

20. Method in accordance with claim 19,
**characterized in that** the system (12, 52) for the sensory stimulation of guests (1) of the animated event
- provides visual contents in particular visual contents either on tables (120), chairs (110), floor sections (63), wall sections, or projected into the room between the components of the event system (10, 50), or provides them to the guest (1) in a personalized viewing device, and/or
- acoustically underscores mechanized movements and/or projected visual contents, and/or
- releases aromatic substances, which are preferably adapted to visual contents or to acoustic underscoring, and/or
- generates haptic sensations, preferably locally at tables (120) or chairs (110).

## Revendications

1. Système événementiel (10, 50) pour un événement animé,
le système événementiel (10, 50) comprenant :
- au moins un composant de mobilier événementiel, mobile dans l'espace (100, 200, 250, 300, 350) qui comprend au moins une table et/ou au moins un siège,
- au moins un dispositif de stimulation sensorielle (12, 52) des invités (1) à l'événement animé,
dans lequel
le composant de mobilier événementiel, mobile dans l'espace (100, 200, 250, 300, 350) comprend des moyens de déplacement par un mouvement mécanique, et
le système événementiel (10, 50) comprenant en outre une première commande (1901) conçue pour commander de manière synchronisée le mouvement mécanique et l'émission par le dispositif (12, 52) de stimulation sensorielle des invités (1) à l'événement animé,
système événementiel (10, 50),
**caractérisé en ce qu'**il comprend en outre :
au moins un élément de paroi, de cloison ou d'écran de protection visuelle (15), mobile, comme autre composant de mobilier événementiel, et - l'élément mobile de paroi, de cloison ou d'écran de protection visuelle (15), est à mouvement mécanique, ce mouvement mécanique étant commandé également par la première commande (1901) et/ou par une autre commande (13).

2. Système événementiel (10, 50) selon la revendication 1, comprenant :
- au moins un segment de sol (63) mobile dans l'espace, ce segment de sol (63) étant déplacé mécaniquement par au moins une installation de déplacement (64), et
- la première commande (1901) est conçue pour commander en synchronisme le mouvement mécanique d'au moins ce segment de sol (63) et l'émission par dispositif (12, 52) de la stimulation sensorielle des invités (1) à l'événement animé.

3. Système événementiel (10, 50) selon la revendication 2,
**caractérisé en ce que**
l'installation de déplacement (64) déplace au moins un segment de sol (63) selon au moins trois degrés de liberté, de préférence selon six degrés de liberté.

4. Système événementiel (10, 50) selon la revendication 2 ou 3,
**caractérisé en ce que**
l'installation de déplacement (64) comprend au moins un entraînement linéaire et/ou un équilibrage de poids.

5. Système événementiel (10, 50) selon l'une des revendications 2 à 4,
**caractérisé en ce que**
l'installation de déplacement (64) comprend une coulisse qui prédéfinit le débattement d'un point d'attaque d'au moins un segment de sol (63).

6. Système événementiel (10, 50) selon l'une des revendications précédentes,
**caractérisé en ce que**
le dispositif de stimulation sensorielle (12, 52) est réalisé et/ou conçu pour la stimulation visuelle, acoustique, olfactive et/ou haptique.

7. Système événementiel (10, 50) selon l'une des revendications précédentes,
**caractérisé en ce que**
l'environnement et/ou la sortie du dispositif (12, 52) pour la stimulation sensorielle est adaptable de manière variable et de préférence en fonction d'une caractéristique de l'invité.

8. Système événementiel (10, 50) selon l'une des revendications précédentes,
**caractérisé en ce que**
le système événementiel (10, 50) comprend en outre une table (11, 120) et des moyens (501) pour fournir de manière automatisée, des aliments sur la table (11, 120), commandés par la première commande (1901) et/ou par une autre commande.

9. Système événementiel (10, 50) selon l'une des revendications précédentes,
**caractérisé en ce que**
le système événementiel (10, 50) comprend au moins un robot ou un bras de robot (400, 800, 1000) commandé par la première commande (1091) et/ou par une autre commande (1907).

10. Système événementiel (10, 50) selon la revendication 9,
**caractérisé en ce que**
le robot ou le bras de robot (400, 800, 1000) est suspendu au plafond et/ou a un rail de guidage (401, 801, 1001) installé au plafond.

11. Système événementiel (10, 50) selon la revendication 9 ou 10,
**caractérisé en ce que**
la première commande (1901) contrôle le mouvement mécanique du composant de mobilier événementiel (100) par une coopération alternée avec le robot ou le bras de robot (800) par la première commande (1901), directement ou indirectement.

12. Système événementiel (10, 50) selon la revendication 8 et l'une des revendications 9 à 11,
**caractérisé en ce que**
la première commande (1901) et/ou l'autre commande sont programmées et installées de façon que les moyens de fourniture automatisés d'aliments sur la table (11, 120), coopèrent avec la fourniture automatisée d'aliments par le robot ou le bras de robot.

13. Système événementiel (10, 50) selon l'une des revendications 9 à 12,
**caractérisé en ce que**
la première commande (1901) et/ou l'autre commande sont programmées et installées pour que le robot ou le bras de robot (400) ccopère avec les invités (1) à l'événement animé.

14. Système événementiel (10, 50) selon l'une des revendications précédentes,
**caractérisé en ce que**
le mouvement mécanique se fait par un système à coussin d'air, un système magnétique, un système de transport terrestre, un système par rail ou une combinaison de ces systèmes notamment par segments.

15. Système événementiel (10, 50) selon l'une des revendications précédentes,
**caractérisé en ce que**
la commande (13) est programmée et installée pour que le dispositif (12, 52) de stimulation sensorielle des invités (1) à l'événement animé,
- fournisse des contenus visuels, notamment projette des contenus visuels sur des tables (120), des sièges (110), des segments de sol (63), des segments de paroi ou dans l'espace entre les composants du système événementiel (10, 50) ou les fournisse à l'invité (1) par un dispositif d'observation personnalisé et/ou supporte les mouvements mécaniques et/ou les contenus visuels projetés, et/ou
- libère des senteurs qui sont, de préférence, adaptées au contenu visuel, ou à l'accompagnement acoustique, et/ou
- génère des sollicitations haptiques de préférence localement au niveau des tables (120) ou des sièges (110).

16. Système événementiel (10, 50) selon l'une des revendications précédentes,
**caractérisé en ce que**
le système événementiel (10, 50) a un ou plusieurs capteurs (1124, 1213) pour saisir le comportement des invités (1) à l'événement animé et qui coopèrent au moins par la communication de signaux avec au moins l'une des commandes.

17. Système événementiel (10, 50) selon l'une es revendications précédentes,
**caractérisé en ce que**
le système événementiel (10, 50) comprend une commande de navigation (1910) qui saisit la position de composant de mobilier événementiel distinct (100, 200, 250, 300, 350) du système événementiel (10, 50) et peut commander le mouvement de différents composants de mobilier événementiel (100, 200, 250, 300, 350) du système événementiel (10, 50).

18. Système événementiel (10, 50) selon l'une des revendications précédentes,
**caractérisé en ce que**
les appareils de service (98) sont disponibles pour les collaborateurs de l'événement (99) qui communiquent directement ou indirectement par signaux avec la première commande (1901) et permettent d'intervenir dans le déroulement de la première commande (1901).

19. Procédé de gestion d'un système événementiel (10, 50) selon l'une des revendications précédentes,
**caractérisé en ce que**
la première commande (1901) synchronise entre eux, automatiquement, le mouvement mécanique d'au moins un composant de mobilier événementiel (100, 200, 250, 300, 350) et/ou au moins d'un segment de sol (63) et l'émission par le dispositif (12, 52) de la stimulation sensorielle des invités (1) à l'événement animé.

20. Procédé selon la revendication 19,
**caractérisé en ce que**
le dispositif (12, 52) de stimulation sensorielle des invités (1) à l'événement animé,
- fournit ou projette des contenus visuels, notamment des contenus visuels sur les tables (11, 120), les sièges (110), les segments de sol, les segments de paroi ou dans l'espace entre les composants du système événementiel ou projette ou fournit ces composants à l'invité (1) dans un dispositif d'observation personnalisé, et/ou
- accompagne de manière acoustique, les mouvements mécaniques et/ou les contenus visuels projetés,
- libère des senteurs adaptées de préférence au contenu visuel ou à l'accompagnement acoustique, et/ou
- génère des excitations haptiques, de préférence localement au niveau des tables (11, 120) ou des sièges (110).
